(19) **Europäisches Patentamt European Patent Office Office européen des brevets**

(11) **EP 1 463 356 B1**

(12) **EUROPEAN PATENT SPECIFICATION**

(45) Date of publication and mention of the grant of the patent:
**13.02.2013 Bulletin 2013/07**

(21) Application number: **01274866.1**

(22) Date of filing: **06.12.2001**

(51) Int Cl.:
*H04W 72/04* *(2009.01)*    *H04W 72/08* *(2009.01)*

(86) International application number:
**PCT/CN2001/001608**

(87) International publication number:
**WO 2003/049476 (12.06.2003 Gazette 2003/24)**

(54) **EQUIPMENT AND METHOD OF CALL ADMISSION IN CDMA BASED SYSTEM**

GERÄTE UND VERFAHREN EINER VERBINDUNGSZULASSUNG IN EINEM AUF CDMA BASIERENDEN SYSTEM

EQUIPEMENT ET PROCEDE D'ADMISSION D'APPEL DANS UN SYSTEME BASE SUR LA TECHNIQUE CDMA

(84) Designated Contracting States:
**AT BE CH CY DE DK ES FI FR GB GR IE IT LI LU MC NL PT SE TR**

(43) Date of publication of application:
**29.09.2004 Bulletin 2004/40**

(73) Proprietor: ZTE Corporation
**Shenzhen 518057 (CN)**

(72) Inventor: HUANG, Chao
**Nanshan District,**
**Shenzhen 518057 (CN)**

(74) Representative: Fuhlendorf, Jörn
**Dreiss Patentanwälte**
**Postfach 10 37 62**
**70032 Stuttgart (DE)**

(56) References cited:
EP-A1- 0 889 663    EP-A1- 0 889 663
EP-A1- 1 071 306    EP-A2- 1 043 908
WO-A-01/35692    US-A- 5 687 171
US-A- 5 838 671

• KEUNYOUNG KIM ET AL: "A call admission algorithm with optimal power allocation for multiple class traffic in CDMA systems" VEHICULAR TECHNOLOGY CONFERENCE, 2000. IEEE VTS FALL VTC 2000. 52ND SEPT. 24-28, 2000, PISCATAWAY, NJ, USA,IEEE, vol. 6, 24 September 2000 (2000-09-24), pages 2666-2671, XP010525072 ISBN: 0-7803-6507-0

• CAPONE A ET AL: "Call admission control techniques for UMTS" VTC FALL 2001. IEEE 54TH. VEHICULAR TECHNOLOGY CONFERENCE. PROCEEDINGS. ATLANTIC CITY, NJ, OCT. 7 - 11, 2001, IEEE VEHICULAR TECHNOLGY CONFERENCE, NEW YORK, NY : IEEE, US, vol. VOL. 1 OF 4. CONF. 54, 7 October 2001 (2001-10-07), pages 925-929, XP010562565 ISBN: 0-7803-7005-8

• LJUPCO JORGUSESKI ET AL: "Radio Resource Allocation in Third-Generation Mobile Communication Systems" IEEE COMMUNICATIONS MAGAZINE, IEEE SERVICE CENTER, PISCATAWAY, US, vol. 39, no. 2, February 2001 (2001-02), pages 117-123, XP011091426 ISSN: 0163-6804

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The present invention relates generally to a control method for CDMA systems in mobile communication field, and more particularly, to a method of uplink and downlink traffic payload power increment estimation and admission control for CDMA systems such as WCDMA, CDMA2000, TD-SCDMA, TD-CDMA and the like.

**Background Art of the Invention**

2G mobile communication systems, regardless of GSM or IS-95, have a common characteristic that, with regard to the single voice service, every channel has a fixed transmission rate and the number of channels in a sector corresponds to the throughput.

To satisfy the ongoing growth of the demand for data traffic development, mobile Internet, or namely the 3rd mobile communication system (3G), has become the highlight in recent research and development activities. In addition to traditional voice traffic, it's also necessary for 3G to carry packet data traffic corresponding to the Internet. The transmission method and the requirement of the packet data traffic are greatly different from voice traffic, e.g. the traffic generation rule is different, the transmission BER and delay are different too, which cause the difference in transfer format and transmission control method for packet data.

All 3G CDMA systems (WCDMA, CDMA2000, TD-SCDMA, TD-CDMA and so on) fall into the category of 3G technical standards, and use code sequences to distinguish different users, which is similar to narrowband CDMA systems (such as IS-95 system) in theory. However, the transmission scheme and system control method in 3G CDMA systems are greatly different from those in IS-95 system. Although there is no uniform method to define it in the word currently, the system power capacity payload is not measured with channel number any more, but represented by power or data throughput. Meanwhile, WCDMA has three main features with support for broadband high-rate, aggregate traffic bearing and variable rate transmission. Since the throughput power capacity payload of 3G CDMA systems is 'soft', which means the power capacity payload varies with different traffic access, so it can be very difficult to judge whether the system satisfies the technical standard. In a practical CDMA system, the key factor is the power, and it's of practical significance to take the throughout power as the payload power of the cell. But the payload power of the cell doesn't have a fixed relationship with the throughput power capacity payload of the cell, that is, both the channel number and the throughput are not fixed.

In a WCDMA system, although the bandwidth is fairly broad, but for the ongoing-increasing traffic demand, the radio power capacity payload over the air is rather limited. When a user initiates a call request for radio access, an admission control must be carried out in order to prevent the system payload power from exceeding the threshold for stable operation and thus leading to system collapse.

3GPP passed and published the technical specification for radio interference - Release 99' version in March. 1999, and keeps on modifying since then. But 3GPP does not work out a uniform standard for the admission control methods for WCDMA system so far, and the current system control methods are developed by respective companies, based on the standard.

The admission control procedure works as: first, measure the current payload power of the cell (base station) accurately, and derive the remaining (available) payload power capacity of the system cell (base station); next, predict and estimate the uplink and downlink payload power increments of the call traffic (including new call traffic and the handover call traffic) respectively; then, compare the traffic payload power increments in the uplink and downlink directions with the remaining (available) payload power capacity of the cell; admit the call traffic if the remaining payload power capacity is sufficient, and reject it otherwise. With the accurate call admission control, more users or traffics can be admitted under the precondition that the system payload power allows (the system runs steadily), and thus to maintain lower call loss rate and lower call drop rate, and achieve higher QoS and higher system power capacity payload.

3G mobile communication systems have another important feature with support for asymmetrical traffic, i.e. data rates in uplink and downlink directions are not equal, even the data rate in some direction can be zero. In this way, an admission control (congestion control or access control) should be necessary in uplink and downlink directions respectively. If the resource requirement (power capacity payload) for the call traffic in either direction is not satisfied, the call traffic can't be admitted.

Another feature of 3G mobile communication systems is to provide a user with communication of several traffics simultaneously, such as making call and meanwhile accessing the Internet. Therefore, a traffic call is taken as a fundamental calling unit.

For an UDD (that is Unconstrained Delay Data) PS (Packet Switch) traffic, when the traffic call is requesting for resource, wireless data communication can be carried out by exploiting the resource in a manner of queuing and waiting. When an admission decision is made, the minimum transfer rate of the UDD traffic (determined by the system transfer format) is taken to estimate the payload power increment. This is a 'soft' decision process.

For a CS (Circuit Switch) traffic, such as voice, movie and other multimedia traffics, an admission decision must be made in a short time period based on the resource that the traffic applies for, and the requirements for transfer rate, quality and delay have to be satisfied thoroughly, otherwise, reject it. This is a 'hard' decision process.

An admission control is carried out during traffic call procedure. When each traffic call applies for radio interface resource, real-time and dynamic measurement must be conducted on the payload power of the current system cell (base station), to get the remaining payload power capacity available for the system, and estimate the call traffic, evaluate the impact of admitting the traffic upon the system. The general criteria is to admit the call and allocate the radio resource and the relevant parameters for it if the remaining payload power capacity can satisfy the resource requirement of the call traffic, and reject it otherwise. However, the traffic carried in 3G mobile communication systems is aggregate traffic, which includes real-time voice traffic and UDD PS traffic, hence the accurate estimation and the valid judgment must be made with respect to different characteristics of the traffic, thus the system power capacity payload can be taken advantage of sufficiently under the precondition of guaranteeing smooth system operation, and thus to achieve efficient utilization of radio resource. Currently, the method for predicting payload power increment of the call traffic is based on the throughput, which can be referred to "*WCDMA for UMTS: Radio Access for Third Generation Mobile Communications*", Harri Holma, et al. The currently used method for predicting the traffic payload power increment does not take power as the core. And the predicted payload power increment of the call traffic is not direct Tx/Rx power increment, and the prediction does not consider the influence of the multiple access interference, thus it is not highly corresponding to the practical system, neither is utility nor accurate, which easily leads to misjudgment of the admission control. In published patent documents, there is no admission control method for aggregate traffic and asymmetric traffic yet. Only some related patents, such as US5687171 "Device and Method for allocating radio channels in a CDMA system", which is the nearest method, it is based on the criteria that a radio channel is allocated if the remnant are higher than the required power after measuring the Rx signal strength at the base station, calculating the allowable remnant, estimating the power required for call. This is the typical admission control method for single traffic and symmetric traffic in 2G, and only the uplink Rx signal strength is measured at the base station. In these methods, neither power climb nor the respective admission control of asymmetric traffic on the uplink and downlink is taken into account when calculating the power required for call traffic. Since the methods for measurement and calculation of the remnant of the payload power are different on uplink and downlink, the requirement for complicated diversity in 3G systems can't be satisfied if not considering the particularity of non-realtime traffic admission and the traffic priority.

In 3G communication systems, since the carried traffic may be asymmetric, that is, the transfer rates for uplink and downlink are different, the admission control has to be carried out on uplink and downlink respectively. Because WCDMA system is a self-interfering system, the uplink power capacity payload is interference-constrained while the downlink power capacity payload is power-constrained. The downlink Tx power of the cell (base station) equipments is constrained by the physical facilities and accordingly the maximum downlink Tx power is limited, hence the power on each carrier frequency in each sector is generally not more than 20W. Thus, for downlink admission control, first, it's necessary to measure the downlink payload power of the cell very precisely, then to analyze the rate, traffic type (real-time or non-real-time traffic), SNR and so on in QoS during the traffic call, and calculate the predictor $\Delta P$ of the Tx power required for the call traffic, and then perform admission control. The call traffic will be admitted when the remaining downlink resource is sufficient for use, and rejected it otherwise. The procedure for the uplink is similar: first, measure the uplink payload power of the cell -the total Rx interference power, predict (estimate) the Rx power increment of the call traffic; and then judge whether the available remaining power capacity payload of the cell is sufficient, and perform admission control. Power climb caused by multiple access interference must be considered when performing uplink and downlink admission control.

When estimating the downlink traffic payload power increment, it's very hard to estimate the traffic payload power increment, which is a well known problem to be settled because the location of the mobile station and downlink path loss usually can not be known accurately. When the measurement of downlink path loss can be utilized, the downlink path loss can be used, but we still need to consider the power climb issue caused by the downlink non-orthogonal factor, which increases the extra power of its traffic channel and also leads to extra increase in the total downlink Tx power, and thus causes the downlink transmission ability to be saturated and ultimately collapse due to the fact that each user's communication quality can't meet the requirement. The admission error only produces influence once and doesn't accumulate, but significant estimation error will increase the call loss rate and thus decrease the system operation efficiency.

On the downlink, a cell generally corresponds to a linear power amplifier, it has only 20W Tx power ability, while downlink admission control mainly concerns on the remaining power capacity payload - that is, whether the power is sufficient for transmission.

When estimating the uplink traffic payload power increment, the multiple access interference between users is the primary concern. All users send the power towards the base station simultaneously, which is a one-to-multiple communication. On the uplink, the spreading codes for distinguishing different users are not orthogonal entirely, so there will be a multiple access interference between users, which deteriorates the communication quality. The more the users, the higher the interference will be. When the user number reaches a certain value so as to cause the total Rx power too high, the interference between users is too serious and the communication quality will decrease drastically. Under closed-loop power control mechanism, the Tx power of each user climbs alternately, which leads to non-linear climb in the power and the total uplink interference power increase dramatically, and ultimately, system collapse occurs when the total Rx interference power exceeds the limit of the receiving circuit.

The total uplink Rx interference power can't exceed the threshold, and the uplink admission control mainly concerns on the remaining power capacity payload (interference remnant) - that is, whether the total Rx power exceeds the limit of the system.

Based on the above characteristics and requirements, when a call traffic requests for accessing the radio access network system, it need to consider both the requirements of the uplink and downlink traffic and the uplink and downlink payload power situations of the system, and the admission control is conducted in uplink and downlink directions respectively.

The current admission control method does not take into account the power climb issue when computing the power required for the call traffic, does not consider the admission control for asymmetric traffic in uplink and downlink directions respectively, and does not consider the particularity of the non-real-time traffic admission and the traffic priority as well, so it can't satisfy the traffic requirements of the next generation mobile communication system.

WO 01/35692 A1 discloses an admission control procedure, which is capable of compensating for delays between radio resource grants and releases using predicted measurement values to permit more accurate admission control in a mobile radio communications system.

One object of the present invention is to provide an accurate admission control equipment and a method for CDMA systems, wherein the power climb is taken into serious account when the power required for the call traffic is calculated, admission control for asymmetric traffic is addressed respectively on uplink and downlink, different methods are used for uplink and downlink measurement and calculation of the payload power remnant, and the admission of non real-time traffic and the traffic priority are processed differently, thus to improve the effect on increasing the system operation efficiency, reducing call blocking rate and call drop rate.

## Summary of the Invention

The present invention relates to an admission control method according to claim 1 and an admission control device according to claim 19, and admission control methods according to claims 28, 29. According to an advantageous embodiment,

steps for determining the downlink path loss L of the traffic are also included.

Steps for determining the downlink climb power of the system cell according to the information contained in the control means are further included.

Wherein, steps for calculating the available remaining downlink capacity of the system cell further comprise:

calculating the processing gain and transmission level required for the traffic downlink;
determining the downlink climb power of the call traffic according to the information in the control means.

And, determining that the downlink climb power satisfies the following equation:

$$\Delta P_{dBm} = L - \left\{ 103 dBm + \left[ P_G - \left( \frac{E_b}{N_0} \right)_{dB} \right] \right\} \qquad \text{dBm}$$

where, $\Delta P_{dBm}$ is the original power payload power increment of the call traffic; the SNR is

$$\left( \frac{E_b}{N_0} \right)_{dB} = 10 \log_{10} \left( \frac{E_b}{N_0} \right); \qquad P_G = 10 \times \log_{10} \left( \frac{3840 kcps}{R} \right) \quad \text{dB is the processing gain; R is traffic rate}$$

with unit as kbps;
then

$$\Delta P = 10^{0.1 \Delta P_{dBm}} \times \upsilon \quad mW;$$

the downlink power climb after traffic access is

$$\Delta P_{total} = \left( \frac{E_b}{N_0} \times \alpha^2 + 1 \right) \Delta P \quad mW$$

wherein $\Delta P$ is the absolute value of the original downlink Tx power; $\upsilon$ is voice activation factor, 1.00 for data traffic (non-voice traffic) and 0.67 for voice traffic (symmetric session traffic), $\Delta P_{total}$ is the downlink power climb after traffic access; $\alpha$ is the downlink non-orthogonal factor for multipath radio environment, ranging from 0.1 to 0.4, depending on the specific radio environment.

Additionally, steps to determine downlink path loss L of the traffic further comprise:

searching for the downlink path loss reported latest by the user ID;
deciding whether the measured path loss is useable and valid: if yes, taking the reported downlink path loss as the downlink path loss L of the traffic; otherwise, taking the first predefined value as the downlink path loss L.

And also, the first predefined value is equal to the path loss of the equivalent radius calculated by substituting the product of the maximum coverage radius of the cell and 0.707 into the propagation model.

Additionally, deciding that the path loss is unusable and invalid if the user ID fails to report the downlink path loss within the predefined time period.

And also, deciding that the path loss is unusable and invalid if the downlink path loss reported by the user ID within the predefined time period is above the second predefined value.

Wherein the second predefined value is equal to the path loss of the equivalent radius calculated by substituting the product of the maximum coverage radius of the cell and 1.4 into the propagation model.

In accordance with another aspect of the present invention, an admission control method is proposed for a CDMA system, the CDMA system includes at least one base station, at least one mobile station requesting for accessing the cell for which the base station serves, and the control means containing the information about the mobile stations for which the base station in the cell is serving and other information in the cell such as the rating payload for different traffic in the cell; wherein the mobile station requesting for accessing the cell for which the base station serves initiates at least one traffic request such as a non real-time or a real-time traffic to the system; said admission control method comprising:

receiving the call request for accessing the cell for which the base station serves from the mobile station;
acquiring the parameters of said mobile station, including the SNR Eb/No, the uplink source rate $R_{up}$, user ID and traffic type required by said at least one traffic;
determining whether the uplink throughput satisfies the uplink requirement of the traffic according to the uplink source rate $R_{up}$: if yes, establish uplink; otherwise, reject the traffic request.

Steps to determine whether the uplink throughput satisfies the uplink requirement of the traffic according to the uplink rate $R_{up}$, include:

deriving the total uplink Rx (interference) power of the cell from the measured data groups reported by the base station;
determining the equivalent Rx power required by the uplink rate $R_{up}$;
determining whether the uplink throughput satisfies the uplink requirement of the traffic according to the total Rx power allowed by the payload of the cell;

Wherein steps to determine whether the uplink throughput satisfies the uplink requirement of the traffic include: determining the equivalent total Rx power required after service is provided to the uplink rate $R_{up}$; satisfying the uplink requirement of the traffic when the equivalent total Rx power is less than or equal to the total Rx power allowed by the payload of the cell.

Also, steps to determine the equivalent total Rx power required after service is provided to the uplink rate $R_{up}$ comprise:

calculating the equivalent throughput corresponding to the call traffic with the total Rx power;

deriving the total throughput by adding the equivalent throughput and the uplink rate $R_{up}$ of the traffic;

obtaining an equivalent total Rx power corresponding to the total throughput calculated with the total throughput.

Also, the calculated equivalent throughput corresponding to the voice call traffic satisfies the following equation:

$$P_{total} = \frac{P_N}{(T_{total} - T_x)^2} \qquad (\text{PT1})$$

where $T_{total}$(kbps) is the equivalent throughput, the equivalent throughput $T_x$ is the maximum throughput power capacity payload of various traffics, $T_x$ = 800kbps when voice traffic is 8kbps and $T_x$ = 793kbps when voice traffic is 12.2kbps; $P_N$ = - 103dBm is background white noise.

Further, the calculated equivalent throughput corresponding to the data call traffic satisfies the following equation:

$$P_{total} = \frac{P_N}{(T_{total} - T_x)^{3/2}} \qquad (\text{PT2})$$

$T_x$ = 1280kbps when data traffic is 64kbps, $T_x$ = 1440kbps when data traffic is 144kbps, and $T_x$ = 1536kbps when data traffic is 384kbps.

Wherein steps to determine whether the uplink throughput satisfies the uplink requirement of the traffic further comprise:

subtracting the total uplink Rx (interference) power (measured value) of the cell from the equivalent total Rx power, to get the uplink Rx power increment of the call traffic;

subtracting the total uplink Rx (interference) power (measured value) of the cell from the total Rx power allowed by the payload of the cell, to get the uplink remaining capacity of the cell;

judging whether the uplink remaining capacity is above the third predefined value: if yes, admit the uplink traffic; otherwise, reject it.

Also, steps to judge whether the uplink remaining capacity is above the third predefined value comprise:

converting the uplink remaining capacity of the cell into the available remaining uplink capacity of the cell, according to the requirement of reserved capacity for handover;

judging whether the available remaining uplink capacity is above the traffic payload increment: if yes, it indicates that the remaining uplink capacity is above the third predefined value.

In accordance with yet another aspect of the present invention, an admission control equipment is proposed for a CDMA system, the CDMA system includes at least one base station, at least one mobile station requesting for accessing the cell for which the base station serves, and a control means containing the information about the mobile stations for which the base station in the cell is serving and other information in the cell such as the rating payload for different traffics in the cell; wherein the mobile station requesting for accessing the cell for which the base station serves initiates at least one traffic request such as a non real-time and a real-time traffic request to the system; said admission control equipment comprising:

receiving means, for receiving the call request for accessing the cell for which the base station serves from the mobile station;

parameters acquiring means, for acquiring the parameters of said mobile station, including the SNR Eb/No, uplink source rate $R_{up}$ or/and downlink source rate $R_{down}$, user ID and traffic type required by said at least one traffic;

signal processing means, for determining the downlink path loss L of the traffic, and determining the downlink climb power of the system cell according to the information in the control means; then, calculating the available remaining downlink capacity of the system cell based on the determined SNR Eb/No, downlink source rate $R_{down}$, user ID and traffic type, and the determined downlink climb power of the system cell;

judging means, for determining whether the downlink can admit the traffic according to the calculated available remaining downlink capacity of the system cell;
link connection means, for establishing downlink, or not connecting so as to reject the traffic request , according to the result determined by the judging means.

Wherein the signal processing means further comprises:

transmission level determining means, for calculating the processing gain and the transmission level required by the traffic downlink;
climb power determining means, for determining the downlink climb power of the call traffic according to the information in the control means;
searching means, for searching for the downlink path loss reported latest by the user ID;
deciding means, for deciding whether the path loss is usable and valid: if usable and valid, taking the reported downlink path loss as the downlink path loss L of the traffic; otherwise, taking the first predefined value as the downlink path loss L.

In accordance with still another aspect of the present invention, an admission control apparatus is proposed for a CDMA system, the CDMA system includes at least one base station, at least one mobile station requesting for accessing the cell for which the base station serves, and a control means containing the information about the mobile stations for which the base station in the cell is serving and other information in the cell such as the rating payload for different traffics in the cell; wherein the mobile station requesting for accessing the cell for which the base station serves initiates at least one traffic request such as a non real-time or a real-time traffic request to the system; said admission control means comprising:

receiving means, for receiving the call request for accessing the cell for which the base station serves from the mobile station;
parameters acquiring means, for acquiring the parameters of said mobile station, including the SNR Eb/No, uplink source rate $R_{up}$, user ID and traffic type required by said at least one traffic;
control means, for determining whether the uplink throughput can satisfy the uplink requirement of the traffic according to the uplink rate $R_{up}$: if yes, establish uplink; otherwise, reject the traffic request.

Wherein the control means includes:

Rx power determining means, for determining the total uplink Rx (interference) power of the cell, which is required by the uplink rate $R_{up}$ and derived from the measured data groups reported by the base station, according to the uplink rate $R_{up}$, and determining the equivalent Rx power required by the uplink rate $R_{up}$;
judging means, for determining whether the uplink throughput satisfies the uplink requirement of the traffic according to the total Rx power allowed by the payload of the cell.

Alternatively, the Rx power determining means further determines the equivalent total Rx power required after providing service to the uplink rate $R_{up}$; the judging means satisfies the uplink requirement of the traffic when the equivalent total Rx power is less than or equal to the total Rx power allowed by the payload of the cell.
Also, the Rx power determining means calculates the equivalent throughput corresponding to the call traffic according to the total Rx power; gets the total throughput by adding the equivalent throughput and the uplink rate $R_{up}$ of the traffic; derives a corresponding equivalent total Rx power by calculating the total throughput.
Additionally, the judging means subtracts the total uplink Rx (interference) power (measured value) of the cell from the equivalent total Rx power, to get the uplink Rx power increment of the call traffic; subtracts the measured uplink Rx total (interference) power of the cell from the absolute value of the Rx total power allowed by the payload of the cell, to get the uplink remaining capacity of the cell; and then judges whether the uplink remaining capacity is above the third predefined value. As a result, admit the uplink traffic if yes and reject it otherwise.
An admission control method for CDMA systems is also proposed by the present invention, comprising:

Step A: extracting parameters from the traffic QoS parameters requested by the call traffic RAB;
Step B: judging whether to perform downlink admission control procedure according to the parameters extracted in Step A: if yes, execute Step C; otherwise, turn to Step E to conduct uplink admission control procedure;
Step C: calculating the downlink payload power increment of the traffic and the available remaining downlink power capacity payload according to the above extracted parameters;
Step D: if the available remaining downlink power capacity payload of the system cell is above the downlink payload power increment of the traffic, setting the downlink admission permission as 'true', and turning to Step E to go on with uplink admission control; otherwise, returning to Step A to process the next traffic call;

Step E: calculating the uplink payload power increment of the call traffic and the available remaining uplink power capacity payload of the cell;

Step F: if the available remaining uplink power capacity payload of the system cell is above the uplink payload power increment of the traffic, setting the uplink admission permission as 'true', and turning to Step G; otherwise, setting the uplink admission permission as 'false', and returning to Step A to process the next traffic call;

Step G: if the uplink admission permission and the downlink admission permission are both 'true', allocating downlink resource and parameters for the call traffic, as well as uplink resource and parameters simultaneously, and altering the status table of the code resource and the resource parameters table of the system cell.

## Brief Description of the Drawings

The substance and the spirit of the present invent will become apparent from the further description of the preferred embodiments of the invention given in conjunction with the accompanying drawings, in which:

Fig.1 is a schematic diagram illustrating the payload power measurement for the cell of the base station (Node B);
Fig.2 is a schematic diagram illustrating the information pass-channel of the call admission control;
Fig.3 is the main flowchart (1) of the call processing in accordance with the method in the present invention;
Fig.4 is the flowchart of the downlink call admission processing with the method in the present invention;
Fig.5 is the flowchart of the uplink call admission processing with the method according to the present invention;
Fig.6 illustrates the uplink control device for call admission control according to the present invention;
Fig.7 illustrates the downlink control device for call admission control according to the present invention.

## Detailed Description of the Invention

Further descriptions will be given below to the present invention, in conjunction with accompanying drawings.

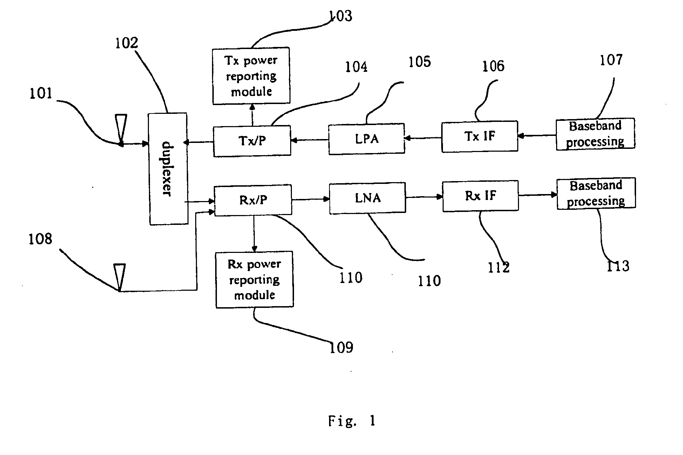

Fig.1 is a schematic diagram illustrating the payload power measurement for the cell of the base station (Node B), where every base station can have 1, 3, or 6 cells (sectors). Every base station has one cell when omni-directional antenna is applied, 3 cells when 120° antenna is applied, and 6 cells when 60° antenna is applied. Every cell has two antennas, wherein one antenna (101) is connected to LPA (105) in the transmission portion and to LNA (110) in the reception portion via duplexer (102), and another antenna (108) is connected directly to the Rx total power measurement circuit (110). The cell payload power measurements in the base station mainly clarify as the measurement of the total Rx power and the measurement of the total Tx power. The total Rx power measurement reporting module (109) reports the output of the total Rx power measurement circuit (110) to RNC (Radio Network Controller) via signaling channel as required, and similarly, the total Tx power measurement reporting module (103) also reports the output of the total Tx power measurement circuit (104) to RNC via signaling channel as required. The transmitted RF signal is a signal which is obtained by passing the signal generated by baseband circuit (107) through the IF transmission processing circuit (106). And similarly, the received signal is processed by the baseband reception processing circuit (113) after being processed by the IF reception processing circuit (112).

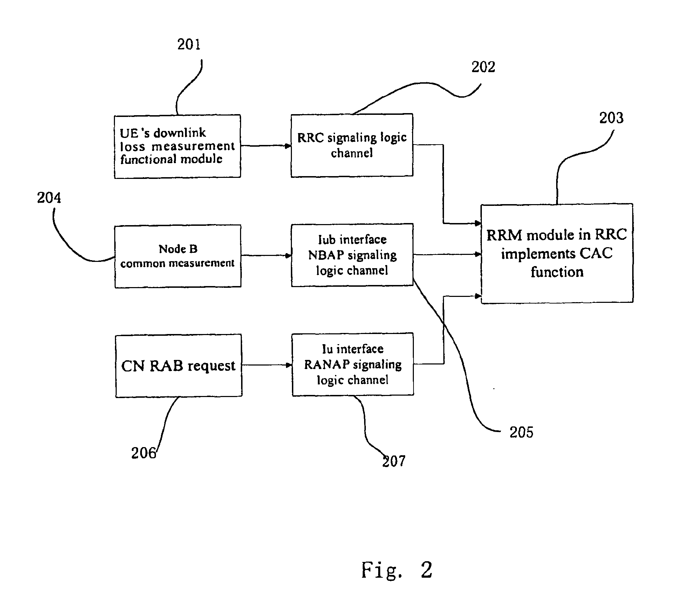

Fig.2 is a schematic diagram illustrating the information pass-channel in the call admission control. First, UE or namely mobile equipment (201) possibly reports the measured downlink path loss to the RRM (Radio Resource Manger) module in RNC (203) via RRC (Radio Resource Control) signaling channel (202), for the RRM module to calculate the Tx power required by the downlink. The common measurement functional module (204) in the base station (Node B) reports the total uplink Rx power of the cell to RNC (203) via Iub interface (205). This is the current payload power of the cell, and it is taken as the basis for admission control judgment to conduct CAC (Call Admission Control).

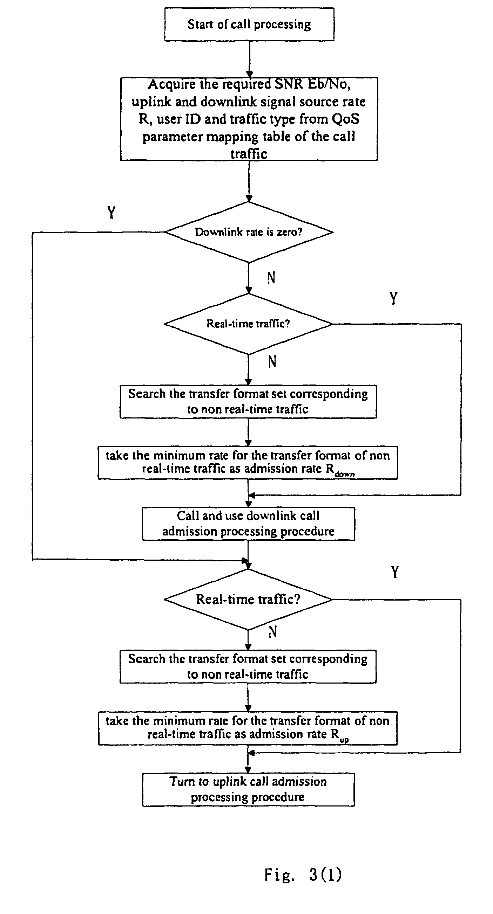

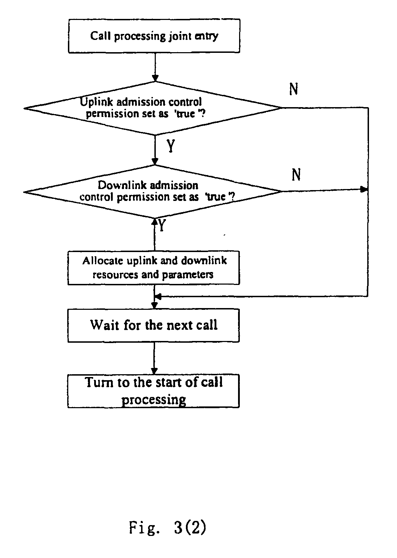

Fig.3 is the main flowchart illustrating call processing with the method according to the present invention, which includes the main control procedures for admission control of uplink and downlink asymmetric traffics. First, judge whether the downlink rate requirement for the traffic is zero. If non-zero, start downlink admission control procedure: processing the non real-time and real-time traffics respectively, with major difference in that non real-time traffic can be processed after queuing and waiting for a while and access at the minimum rate, but real-time traffic almost can't wait and requires rate guaranteed. Then, call and use the downlink admission control processing program. After the downlink admission control is accomplished, uplink the admission control procedure will be carried on, wherein the uplink admission control also distinguishes real-time and non real-time traffics first and then processes them respectively, which is similar to the downlink admission control procedure.

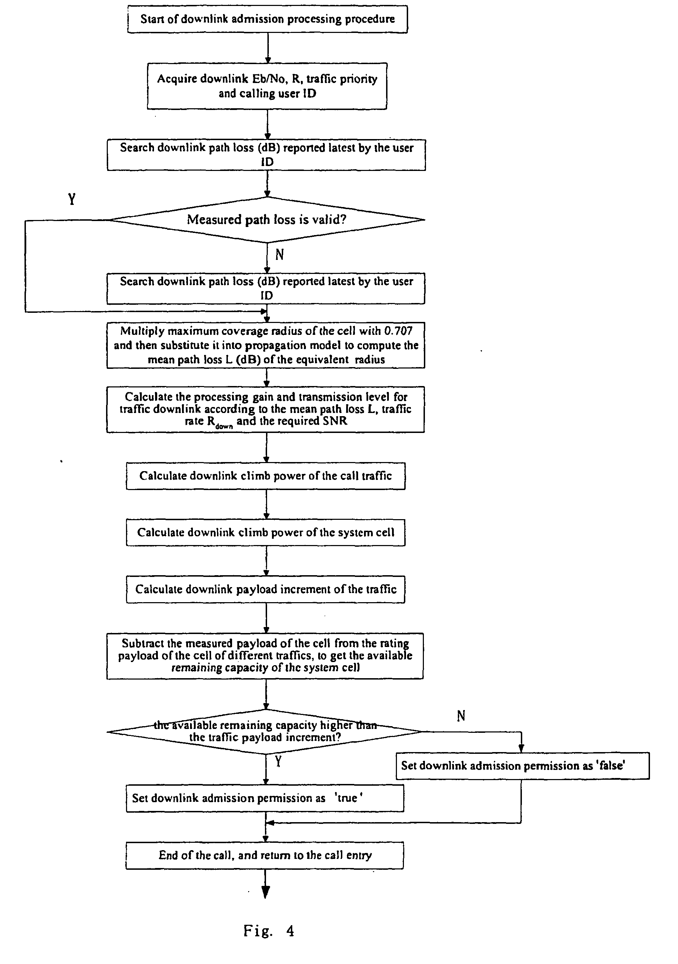

Fig.4 is a detail flowchart for the downlink call admission processing with the method according to the present invention, wherein a prediction method is adopted by combining the measurement with the equivalent coverage radius, in order to predict the power increment and the payload power increment of the downlink traffic during calling. When there is no measurement reported by the cell (base station), we will adopt the downlink path loss calculated with the equivalent radius. And the functionality of measurement report is just optional because it's not necessary for the cell to report the measurement. The call may be a call initiated from UE in idle status, a call of newly added traffic in connection, a handover call or a call from the wired network side. RRM in the higher layer of RNC acquires the QoS parameters and measurement parameters of the call traffic from RRC signaling, and obtains the traffic type (voice or data), traffic rate, BER requirement (SNR Eb/No requirement) and priority from the QoS parameters, and obtains the current payload power and the downlink path loss of the system from the measurement parameters, thus to predict the power increment $\Delta P$ of the call. Then, the final power increment of the traffic can be derived by further considering the influence of the non-orthogonal factor caused by radio multipath environment and the power climb amount, and then convert it into the downlink payload power increment $\Delta \eta$. Only in the condition that the current payload power of the system is judged accurately, the admission control can be achieved correctly. With regards to the priority of the call traffic, the admission control will have two thresholds when judging the payload power threshold of the system, and the difference between the two thresholds is the reserved power capacity payload for the handover, for use in soft switch, and to guarantee lower call drop rate in hard switch. In a word, the accurate downlink admission control can be performed when the downlink path loss is reported, and the admission control can also be conducted even if it's not reported. When calculating the downlink payload power increment of the traffic, consider the downlink non-orthogonal factors, the power climb issue caused thereafter and the traffic priority, and set different admission thresholds for different priorities, thus to predict accurately the influence of the call traffic access upon the system, so as to improve the effect on increasing the system operation efficiency, and reducing the call blocking rate and call drop rate.

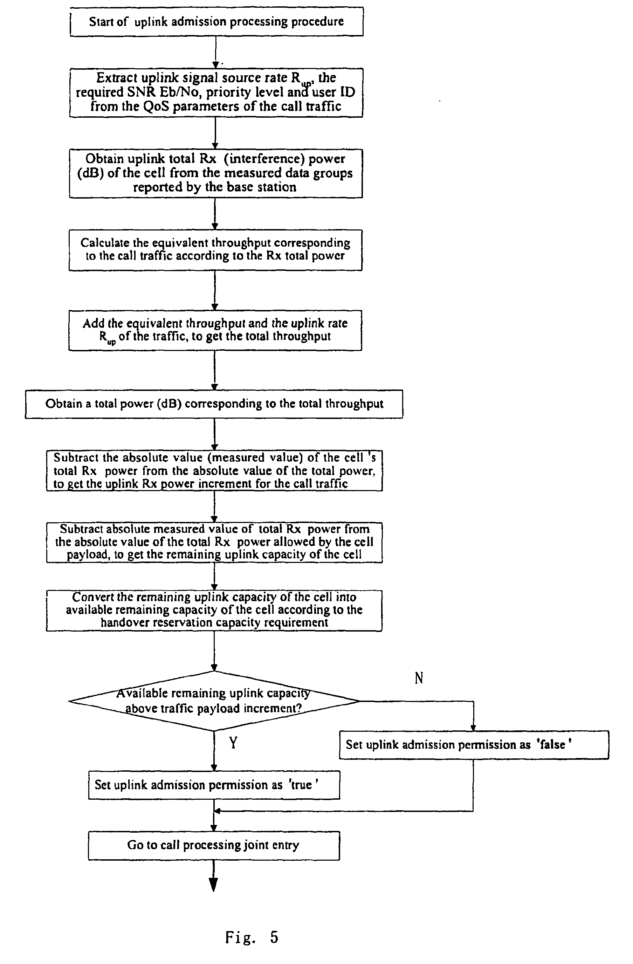

Fig.5 illustrates the detailed flowchart for the uplink call admission processing with the method according to the present invention, which is basically similar to the downlink call admission procedure, with major difference in that it's not necessary to consider the path loss issue and the payload power of the cell is completely in accordance with the power, without being converted into percentage. In uplink admission control, RRM module in the higher layer of the RNC acquires the QoS parameters of the call from signaling, obtains the traffic type (voice or data), traffic uplink rate, BER requirement (SNR Eb/No requirement) and priority from the QoS parameters, and obtains the current payload power of the system from the measurement parameters. According to the uplink multiple access interference, consider the multiple access interference in the case of the current payload power of the cell, i.e. the power climb caused by multiple access interference, thus to predict the power increment $\Delta P$ of the call traffic and the payload power increment $\Delta \eta$. In this way, the correct admission control can be conducted in the condition that the current payload power of the cell is judged accurately. Considering the priority of the call traffic, the admission control will also have two thresholds when judging the payload power threshold of the system, and the difference between the two thresholds is the reserved power capacity payload for handover, which is for use in soft switch and can guarantee lower call drop rate in hard switch. In a word, the uplink admission control takes multiple access interference into account, wherein the calculation of the uplink payload power increment of the call traffic considers the power climb caused by multiple access interference and the traffic priority with different admission thresholds for different priorities, thus to predict accurately the influence of the call traffic access upon the system, improve the effect on increasing system operation efficiency, and lowering the call congestion rate and call drop rate.

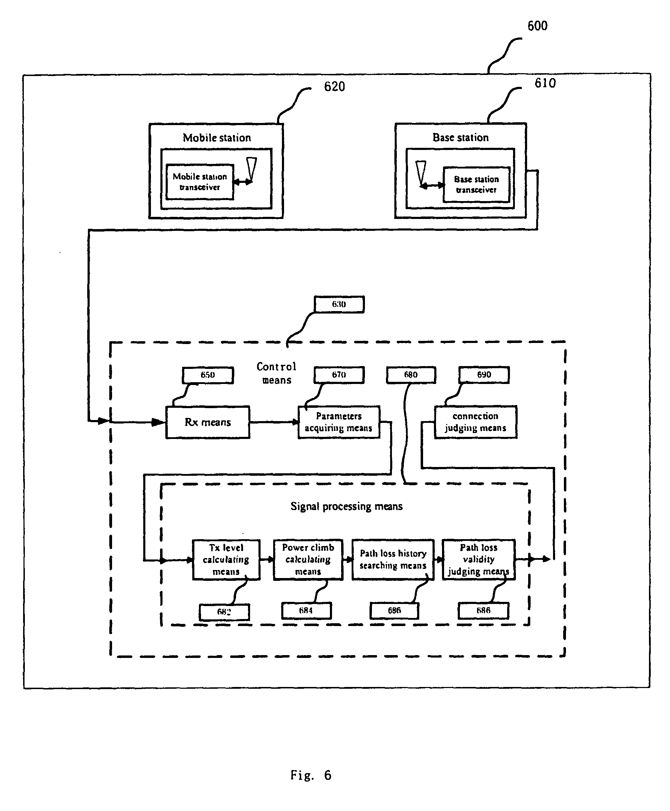

Fig.6 illustrates the downlink control device for the call admission control in the present invention. In CDMA system 600, there are at least one base station 610, at least one mobile station 620 requesting for accessing the cell for which the base station serves, a control means 630 containing the information about the mobile station for which the base station in the cell is serving and other information about the cell such as the rating payload for different traffic. The downlink control device including a base station 610 and a control means 630 comprise receiver 650 as the receiving means, for receiving the call request for accessing the cell for which the base station serves from mobile station 620. The downlink control device includes a parameters acquiring means 670, for acquiring parameters of said mobile station 620 from the information received by receiver 650 and the information in control means 630, including but not restricted to, the required SNR Eb/No, uplink source rate $R_{up}$ or/and downlink source rate $R_{down}$, user ID and traffic type. The downlink control device further includes a signal processing means 680 constructed by CPU and its accessories, for determining the downlink path loss L of the traffic according to the information acquired by parameters acquiring means 670; determining the downlink climb power of the system cell according to the information in the control means; and then calculating the available remaining downlink capacity of the system cell, according to the determined path loss L, downlink source rate $R_{down}$ and the required SNR Eb/No, and the determined downlink climb power of the system cell. Wherein judging means 690 determines whether the downlink can admit the traffic according to the available remaining downlink capacity of the system cell calculated by signaling processing means 680. If the traffic can be admitted, the link connection means establishes downlink with mobile station 620 according to the result determined by the judging means; otherwise, the traffic request will be rejected. In practical applications, it's very likely that mobile station 620 only needs to establish downlink non real-time traffic (such as reception of e-mails and so on) or just to establish downlink real-time traffic (such as reception of speech notification and so on). At this moment, only downlink is required to be established.

In the downlink control device, signal processing means 680 further comprises transmission level determining means 682, climb power determining means 684, searching means 686 and judging means 688. Wherein transmission level determining means 682 is for calculating the processing gain and the transmission level required by the traffic downlink. Climb power determining means 684 determines the downlink climb power of the call traffic according to the information in the control means. Searching means 686 searches for the downlink path loss reported by the user ID latest. Judging means 688 judges whether the path loss is usable and valid: if usable and valid, taking the reported downlink path loss as the downlink path loss L of the traffic; otherwise, taking the first predefined value as the downlink path loss L.

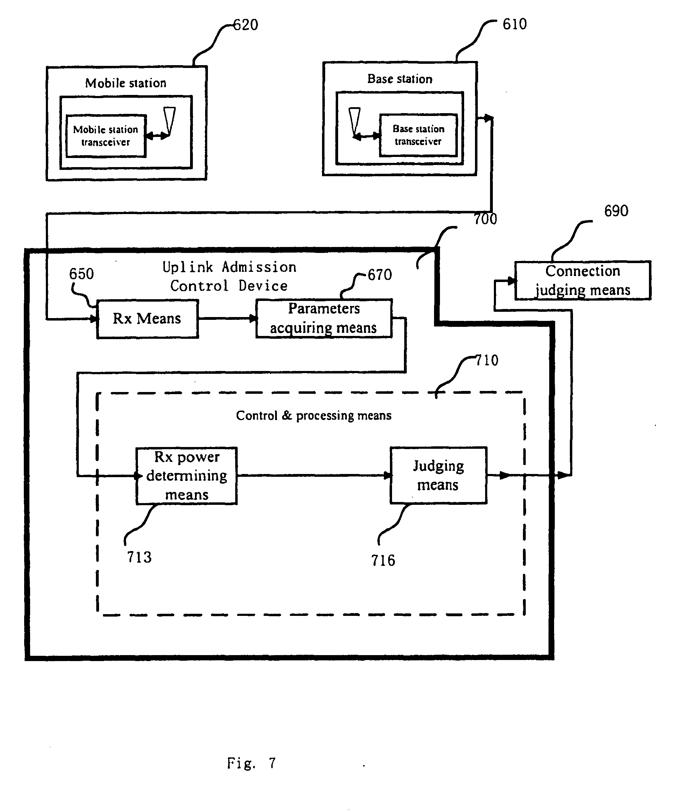

Fig.7 displays the uplink control device for the call admission control in the present invention, in which the parts same as those in Fig.6 are denoted by same reference numerals. The uplink admission control device 700 comprises: receiving means 650, parameters acquiring means 670 and control & processing means 710. Wherein, receiving means 650 receives the call request for accessing the cell for which the base station serves from the mobile station; parameters acquiring means 670 acquires parameters of said mobile station, including the SNR Eb/No, uplink source rate $R_{up}$, user ID and traffic type required by at least one traffic; control & processing means 710 determines whether the uplink throughput can satisfy the uplink requirement of the traffic according to the uplink rate $R_{up}$: if yes, establish uplink; otherwise, reject the traffic request.

Where control & processing means 710 includes Rx power determining means 713 and judging means 716, wherein Rx power determining means 713 determines the total uplink Rx (interference) power of the cell required by the uplink rate $R_{up}$, which is obtained from the measured data groups reported by the base station, and determines the equivalent Rx power required by the uplink rate $R_{up}$; judging means 716 determines whether the uplink throughput can satisfy the uplink requirement of the traffic according to the total Rx power allowed by the payload of the cell. Rx power determining means 713 also determines the equivalent total Rx power required after providing service to the uplink rate $R_{up}$; and judging means 716 will satisfy the uplink requirement of the traffic when the equivalent total Rx power is less than or equal to the total Rx power allowed by the payload of the cell. Additionally, Rx power determining means 713 calculates the equivalent throughput corresponding to the call traffic according to the total Rx power; adds the equivalent throughput and the uplink traffic rate $R_{up}$ to get the total throughput; and obtains an equivalent total Rx power corresponding to the total throughput. Judging means 716 subtracts the total uplink Rx (interference) power (measured value) of the cell from the equivalent total Rx power, to get the uplink Rx power increment of the call traffic; subtracts the measured total uplink Rx (interference) power from the absolute value of the total Rx power allowed by the payload of the cell, to get the uplink remaining capacity of the cell; and then judges whether the uplink remaining capacity is above the third predefined value: if yes, admit the traffic; otherwise, reject it.

Then, control & processing means 710 converts the uplink remaining capacity into the uplink available remaining capacity of the cell according to the requirement of the reserved capacity requirement for handover. The judging means judges whether the uplink available remaining capacity is above the traffic payload increment: if yes, it indicates that the uplink remaining capacity is above the third predefined value.

In practical applications, it's very likely that mobile station 620 only needs to establish uplink non real-time traffic (such as transmission of e-mails and so on) or just to establish uplink real-time traffic (such as transmission of voice notification and so on). At this moment, only uplink is required to be established.

In some practical applications, it's also likely that both uplink and downlink traffics need to be established, and at this moment, the apparatus should include the components in Fig.6 and Fig.7.

## Preferred Embodiments of the Invention

The functional blocks of the present invention are embodied in RNC in form of software, and RNC controls and manages several base stations (cells). In conjunction with steps in the present invention, an embodiment can give further description as below:

Step 1: extracting the signal source rate R, the required SNR Eb/No, priority level and user ID of the call traffic, from the QoS parameters carried by the RAB (radio access bearer) request of the call traffic (user);

Step 2: checking whether the downlink rate of the call traffic is zero. If not zero, turn to Step 3 to go on with the downlink admission control; otherwise, turn to Step 14 to start to execute steps for the uplink admission control processing;

Step 3: further extracting the downlink data rate of the call traffic, the required SNR Eb/No, traffic type (real-time traffic or non real-time traffic) and the calling user ID from the QoS parameters. From the traffic type, the delay requirement for the traffic can be known, and the queuing line and the time duration to be waited for should be taken into account when queuing priority. With user ID, it can be judged whether the user has any traffic in communication, thus consider the combined utilization of the radio link, that is, to establish a new radio link or reconfigure the old radio link. Non real-time traffic takes the minimum transmission rate requirement as the admission rate.

Step 4: searching the database for the downlink path loss L (dB) reported by the corresponding user latest with the user ID. In general, during call connection initialization, the mobile station will measure the downlink path loss and report it to the RNC. This value must be measured within the last hundreds milliseconds to few seconds, otherwise it's invalid. For example, if the mobile station moves 6.67 meters at 120km/h within 200ms, or the time duration can be extended a little, but it will cause loss of accuracy if moving distance is too long and it is of no practical signi ficance.

Step 5: judging whether the downlink path loss L is valid, i.e. the non-zero path loss at a recorded time, and the time difference between the value record time and the current time is within at most several seconds. Taking the real-time measurement value as the path loss and turning to Step 7 for further calculation. Otherwise, turning to Step 6 to get the approximation of the downlink path loss through estimation.

Step 6: when the measured path loss value losses time validity, take the cell parameters (antenna height $\Delta h_b$ of the base station and the maximum coverage radius $r_{max}$ of the cell) and 70.7% of the cell's maximum coverage radius as the propagation distance parameters, and substitute them into the following equation for propagation model, to calculate the mean $L_j$ (the approximation of the path loss L) of the path loss of the equivalent radius, for replacing the path loss L:

$$L_j = 80 + 40(1 - 4 \times 10^{-3} \Delta h_b) \log_{10}(\frac{\sqrt{2}}{2} r_{max}) + 21 \times \log_{10}(f) - 18 \log_{10}(\Delta h_b) \quad \text{dB}$$

Step 7: after the downlink path loss L is derived in Step 5 or 6, by using the downlink rate $R_{down}$ of the traffic and the required SNR Eb/No, the original value of the power payload power increment can be calculated by:

$$\Delta P_{dBm} = L - \left\{ 103dBm + \left[ P_G - \left( \frac{E_b}{N_0} \right)_{dB} \right] \right\} \quad \text{dBm}$$

where $\left( \frac{E_b}{N_0} \right)_{dB} = 10 \log_{10} \left( \frac{E_b}{N_0} \right)$, $\quad P_G = 10 \times \log_{10}(\frac{3840 kcps}{R})$ dB is the processing gain, R is the traffic rate with unit as kbps.

White noise power $P_0 = kT_0B$, and $P_0(dB) = 10\lg(kT_0B)$, wherein $T_0$ is the absolute ambient temperature ($^oK$), k is Boltzmann's constant as $1.38 \times 10^{-23}$ J/$^oK$, $B$ is the communication bandwidth (Hz) and the bandwidth for WDMA system is 5Mhz, and take $P_0 = -103\ dBm$ under normal temperature.

The original value of the predicted transmission power in dB should be transformed into the absolute value, and the statistical multiplex factor for voice traffic needs to be considered in conversion. The absolute value (mW) of the original downlink transmission power required for calculating the call traffic can be given as follows:

$$\Delta P = 10^{0.1 \Delta P_{dBm}} \times \upsilon \quad \text{mW}$$

where $\upsilon$ is voice activation factor, being 1.00 for data traffic (non voice traffic) and 0.67 for voice traffic (symmetric session traffic).

Step 8: Since WCDMA system is a self-interfering system, the multipath propagation over downlink radio link causes non-orthogonality of the physical code channels, so that the separation of physical code channels is not complete. And there are still mutual interferences. That is, non-orthogonality will cause multiple access interference or noises between physical code channels, and thus the SNR of each physical code channel is decreased. The more the physical code channels, the higher the interference will be. To offset the decrease in SNR caused by non-orthogonality, a power climb amount has to be added. To calculate the downlink power climb amount after traffic access based on Step 7:

$$\Delta P_{total} = \left( \frac{E_b}{N_0} \times \alpha^2 + 1 \right) \Delta P \quad mW$$

where $\alpha$ is the downlink non-orthogonal factor in multipath radio environment, ranging from 0.1 to 0.4, depending on the specific radio environment.

Step 9: in a practical system, the downlink payload power of the base station (cell) of the system reported to RNC is a percentage, so we can get the total downlink Tx power $P_0$ by using the reported payload power $\eta$ (%)through practical measurement and the maximum Tx power $P_{max}$ (mW) of the base station (cell), so as to further calculate the power climb of the base station (cell):

$$P_0 = \eta \times P_{max} \quad mW$$

Due to the influence of downlink non-orthogonal factors in WCDMA system, multiple access interference exists between the physical code channels. If a user (traffic) accesses when a power has reached balance, the transmission power of the user will cause the SNR of other physical code channels to decrease and cause the transmission power of other channels to increase somewhat. Estimation of the total Tx power when taking into account power climbs after the traffic access can be calculated with the following equation:

$$\Delta P_0 = P_0 \alpha^2 \quad mW$$

Step 10: the case of the power climb caused by call traffic (user) access is considered in the above, the payload power increment caused by traffic access can be predicted with the following equation:

$$\Delta \eta_{DL} = \frac{\Delta P_0'}{P_{max}} \%$$

where $\Delta P_0' = \Delta P_0 + \Delta P_{total}$

Step 11: reserving the power capacity payload required for soft switch, according to the requirement for soft switch, to avoid call drop and significant decrease in the system QoS when the user can't get enough power capacity payload during soft switch. Considering that the downlink power capacity payload reserved for soft switch is 50% and with a low PAR (Peak-to-Average power Ratio) the payload power for guaranteeing smooth system operation is 90%, the admission threshold for non-handover traffic call is 60% while that for handover traffic call is 90%, and the available remaining power capacity payload of the cell can be further determined accordingly. That is: the available remaining power capacity payload for non-handover call traffic can be calculated by $\eta_m \% = 60 \% - \eta \%$ ; while the available remaining power capacity payload for handover call traffic can be calculated by $\eta_m \% = 90 \% - \eta \%$.

Step 12: if the available remaining power capacity payload is above the downlink traffic payload power increment, admit the call traffic, set the downlink traffic admission control permission as 'true' and then go to Step 14 for uplink admission control; otherwise, reject it, set the downlink traffic admission control permission as "false" and turn to Step 24 to wait for the next call;

Step 13: extracting the uplink source rate $R_{up}$, the required SNR Eb/No, priority level and user ID for the traffic from the QoS parameters of the call traffic, and taking the minimum rate as the admission rate for non real-time traffic;

Step 14: extracting the total uplink Rx (interference) power $P_{total}$ (dBm) of the cell from the data groups reported by the base station, which is reported to RNC regularly by the base station equipment via signaling channel, and is the real-time uplink payload power of the cell;

Step 15: calculating the equivalent throughput $T_{total}$ (kbps) corresponding to the cell with the following equation, according to the traffic type and with reference to the total uplink Rx (interference) power $P_{total}$ of the cell:

$$P_{total} = \frac{P_N}{(T_{total} - T_x)^2} \qquad (\text{PT1})$$

where $T_{total}$ (kbps) is the equivalent throughput, $T_x$ is the maximum throughput power capacity payload for various traffic, $T_x$ is 800kbps for 8kbps voice traffic and 793kbps for 12.2kbps; and $P_N$=-103dbM is background white noise. For data traffic, the equation is as following:

$$P_{total.} = \frac{P_N}{(T_{total} - T_x)^{3/2}} \qquad (\text{PT2})$$

$T_x$ is 1280kbps for 64kbps, 144kbps for 144kbps, and 384kbps for 1536kbps.

Equations (PT1) and (PT2) represent the rule of the power climb, and the power climb procedure is the non-linear increase procedure of the power.

Step 16: adding the traffic source rate R (kbps) and the equivalent throughput $T_{total}$ (kbps), to get the total throughput after traffic access;

Step 17: substituting the total throughput into the above equation (PT1) or (PT2), to obtain the total power $P'_{total}$ (*dBm*) of the cell after traffic access;

Step 18: converting $P'_{total}$(*dBm*) *and* $P_{total}$ (dBm) into absolute value, and then get the upplink $R_x$ power increments of the traffic through subtraction:

$$\Delta P = P'_{total} - P_{total} = 10^{0.1 P'\, total\ (dBm)} - 10^{0.1 P\, total\ (dBm)}$$

Step 19: subtracting the total Rx (interference) power measured and reported by the base station from the threshold of the maximum downlink transmission power of the cell, to get the uplink remaining power capacity payload of the cell, wherein the threshold is a maximum Rx power for guaranteeing stable system operation. That is:

$$\Delta P_m = P_{th} - P_{total} = 10^{0.1 P_{th}\ (dBm)} - 10^{0.1 P_{total}\ (dBm)}$$

Step 20: reserving the power capacity payload required for soft switch, according to the requirement for soft switch, to avoid call drop and significant decrease in the system QoS when the user can't get enough power capacity payload during soft switch. Considering that the uplink power capacity payload reserved for soft switch is 50% and the uplink payload power (maximum payload power) for guaranteeing stable system operation is 90%, the admission threshold for non-handover traffic call is 60% while that for handover traffic call is 90%, and the available remaining uplink power capacity payload of the cell can be further determined accordingly. That is: the available remaining power capacity payload for non-handover call traffic can be calculated with

$$\Delta P_m = P_{th}(60\%) - P_{total} = 10^{9.3 dBm} - 10^{0.1 P\, total\ (dBm)}$$

the available remaining power capacity payload for handover call traffic can be calculated by:

$$\Delta P_m = P_{th}(90\%) - P_{total} = 10^{8.4 dBm} - 10^{0.1 P\, total\ (dBm)}$$

wherein 60% of the uplink payload power (uplink Rx total power) is equivalent to -93dBm, rising to -93dBm from -103dBm for empty carrying, while 90% of the payload power corresponds to -84dBm.

If the available remaining uplink power capacity payload $\Delta P_m$ of the system cell (base station) is above the uplink $R_x$ power increment $\Delta P$ of the traffic, that is, $\Delta P_m \leq \Delta P$, set the uplink admission permission as 'true', and go to Step 22; otherwise, go to Step 1 to process the next traffic call;

Step 22: if both the uplink and downlink admission permissions are 'true', allocating downlink and uplink resource parameters for the call traffic; and allocating system resource parameters, and more particularly, the parameters for establishing radio link, such as spreading factor, transfer format, scrambling code and so on;

Step 23: if the call traffic is admitted, the code resource table and the system payload power table need to be altered, so as to judge the next call admission control with the latest condition; if the call traffic is rejected, the code resource table and the system payload power table need no alteration; then wait for the next traffic call requesting for access, and iterate the above procedure from Step 1 when the call is received next time. When a traffic initiates the call or the call queue outputs, the call admission control procedure will be executed once.

As stated above, the present invention puts forward the following methods for the first time: 1. consider the power climb caused by multiple access interference in both uplink and downlink; 2. estimate the uplink and downlink payload power increment for the call traffic respectively, to be adapted to the access of asymmetric traffic; 3. employ estimation method for the path loss with equivalent mean radius on the downlink, and estimate the transmission power for the uplink traffic when no measurement information can be exploited, thus to estimate the payload power increment of the traffic; 4. perform admission control on uplink and downlink respectively; 5. admit non real-time traffic with minimum allowable transfer rate. This solves the problem of performing accurate admission control for asymmetric traffic, i.e. the contradiction between stable system operation and call loss rate at higher payload power. This invention aims at the network design for CDMA systems and the admission control mechanism in network operation, and can estimate the downlink payload power increment of the call traffic accurately and facilitate admission control, thus improve the effect on increasing the network operation efficiency, and reducing call loss rate and call drop rate.

Although the present invention has been shown and described with respect to exemplary embodiments thereof, it should be understood by those skilled in the art that various changes, omissions and additions may be therein and thereto, without departing from the scope of the invention.

## Claims

1. An admission control method performed by a base station (610) in a CDMA system, for controlling a mobile station (620) to access a cell for which the base station (610) is serving, wherein the method comprises the steps of:

   a) receiving, from the mobile station (620), a call request for accessing the cell to initiate at least one traffic;

   b) acquiring parameters from the call request, wherein the parameters include SNR Eb/No, uplink source rate $R_{up}$ and/or downlink source rate $R_{down}$, user ID and traffic type required by the at least one traffic;

   c) estimating, according to the acquired parameters, a downlink climb power occurred after the at least one traffic being accessed, and determining whether to admit the at least one traffic in downlink based on the downlink climb power, when the downlink rate of the at least one traffic is non-zero, wherein admitting the at least one traffic in downlink when the downlink climb power is less than a downlink remaining power capacity, otherwise, rejecting to admit the at least one traffic;

   d) estimating, according to the acquired parameters, an uplink Rx power increment occurred after the at least one traffic being accessed, and determining whether to admit the at least one traffic in uplink based on the uplink Rx power increment, wherein admitting the at least one traffic in uplink when the uplink power increment is less than a uplink remaining power capacity, otherwise, rejecting to admit the at least one traffic;

   e) establishing uplink and/or downlink for the admitted at least one traffic, if the at least one traffic is admitted in both uplink and downlink, otherwise, rejecting the call request.

   wherein the traffic type indicates the at least one traffic is a non real-time traffic or a real-time traffic, and when it is a non real-time traffic, the method further comprises:

   searching a transport format set of the at least one traffic, and taking lowest rate in the transport format set as the uplink rate $R_{up}$ or the downlink rate $R_{down}$.

2. The method according to claim 1, wherein, according to the SNR Eb/No, the downlink rate $R_{down}$, the user ID and the traffic type required by the at least one traffic, the downlink climb power of step (c) is estimated as $\Delta P_{dBm}$ in dBm,

$$\Delta P_{dBm} = L - \left\{ 103 dBm + \left[ P_G - \left( \frac{E_b}{N_0} \right)_{dB} \right] \right\},$$

wherein, $\left( \frac{E_b}{N_0} \right)_{dB}$ is the SNR Eb/No in dB, i.e. $\left( \frac{E_b}{N_0} \right)_{dB} = 10 \log_{10} \left( \frac{E_b}{N_0} \right)$ ,

$P_G$ is a processing gain and $P_G = 10 \times \log_{10}(\frac{3840 kbps}{R})$ dB, where $R$ is the downlink rate $R_{down}$ in kbps, and L is downlink path loss.

3. The method according to claim 2, wherein, when the at least one traffic includes data traffic (non-voice traffic) and/or voice traffic, the downlink climb power is modified to $\Delta P$:

$$\Delta P = 10^{0.1 \Delta P_{dBm}} \times \upsilon \quad mW$$

wherein, $\upsilon$ is a voice activation factor, the value of which for the data traffic is different from that for the voice traffic.

4. The method according to claim 3, wherein, when considering non-orthogonality of physical code channels in downlink, the downlink climb power is modified to $\Delta P_{total}$:

$$\Delta P_{total} = \left( \frac{E_b}{N_0} \times \alpha^2 + 1 \right) \Delta P \quad mW$$

wherein, $\alpha$ is a downlink non-orthogonal factor under multipath radio environment and dependent on specific radio environment.

5. The method according to claim 4, wherein, considering that transmitting power of other channels will increase due to accessing the at least one traffic, the downlink climb power is further modified to $\Delta P_0'$ in mW:

$$\Delta P_0' = \Delta P_0 + \Delta P_{total}$$

wherein $\Delta P_0 = P_0 \alpha^2$ mW,
$P_0$ is a total downlink transmitting power occurred before the at least one traffic being accessed,
$\alpha$ is a downlink non-orthogonal factor under multipath radio environment and dependent on the specific radio environment.

6. The method according to claim 2, further comprising:

   searching for a measured downlink path loss, lately reported by the mobile station, in a database through using the user ID;
   determining whether the measured downlink path loss is available and valid;
   taking the measured downlink path loss, if available and valid, as the downlink path loss.

**7.** The method according to claim 6, wherein the downlink path loss is equal to a path loss of an equivalent radius, which is 70.7% of the maximum coverage radius of the cell, if the measured downlink path loss is invalid or unavailable, wherein the path loss of an equivalent radius is calculated by substituting the equivalent radius into a propagation model.

**8.** The method according to claim 6, wherein the measured downlink path loss is unavailable or invalid, if the mobile station fails to report the measured downlink path loss within a predetermined period.

**9.** The method according to claim 8, wherein the measured downlink path loss, reported by the mobile station within the predetermined period, is unavailable or invalid, if the measured downlink path loss is greater than a second predetermined value.

**10.** The method according to claim 9, wherein the second predetermined value is a path loss of an equivalent radius, which is 1.4 times of the maximum coverage radius of the cell, and the path loss of the equivalent radius is calculated by substituting the equivalent radius into a propagation model.

**11.** The method according to claim 1, wherein the step (c) further comprises:

calculating downlink remaining power capacity, according to the reported payload power through practical measurement and the maximum downlink payload power of the cell;
judging whether the downlink climb power is less than the downlink remaining power capacity;
admitting the at least one traffic in downlink, if the downlink climb power is less than the downlink remaining power capacity, otherwise, rejecting to admit the at least one traffic.

**12.** The method according to claim 11, wherein the maximum downlink payload power is determined according to downlink power capacity reserved for soft switch.

**13.** The method according to any claim of claims 1-12, wherein the step (d) comprises:

(d1) estimating uplink throughput occurred after the at least one traffic being accessed, according to the uplink rate $R_{up}$ and a measured total uplink receiving (interference) power $P_{total}$ which is measured before the at least one traffic is accessed;
(d2) calculating the uplink Rx power increment occurred after the at least one traffic being accessed, according to the estimated uplink throughput;
(d3) judging whether the uplink Rx power increment is less than uplink remaining power capacity;
(d4) admitting the at least one traffic in uplink, if the uplink power increment is less than the uplink remaining power capacity, otherwise, rejecting to admit the at least one traffic.

**14.** The method according to claim 13, wherein, in the step (d1), the uplink throughput occurred after the at least one traffic being accessed is a sum of the uplink rate $R_{up}$ of the at least one traffic and an equivalent uplink throughput $T_{total}$ calculated from the measured total uplink receiving power $P_{total}$.

**15.** The method according to claim 14, wherein the relation between the equivalent uplink throughput $T_{total}$ and the measured total uplink receiving power $P_{total}$ is defined as following equations:
for voice traffic:

$$P_{total} = \frac{P_N}{\left(T_{total} - T_x\right)^2}$$

for data traffic:

$$P_{total} = \frac{P_N}{\left(T_{total} - T_x\right)^{3/2}}$$

wherein, $T_x$ (kbps) is the maximum throughput power capacity payload;
$P_N$ is power of white noise.

16. The method according to claim 15, where the step (d2) further comprising:

    calculating equivalent total receiving power occurred after the at least one traffic being accessed, according to the estimated uplink throughput;
    obtaining the uplink Rx power increment, by subtracting the measured total uplink receiving power $P_{total}$, from the calculated total receiving power occurred after the at least one traffic being accessed.

17. The method according to claim 16, wherein the step (d3) further comprises:

    obtaining the uplink remaining power capacity, by subtracting the measured total uplink receiving power from the maximum total uplink receiving power allowed by the payload of the cell.

18. The method according to claim 17, wherein the maximum total uplink receiving power allowed by the payload of the cell is determined according to the reserved capacity for soft switch.

19. An admission control device for use in a CDMA system, for controlling a mobile station to access a cell for which a base station is serving, wherein the device comprises:

    a receiving means (650), for receiving, from the mobile station, a call request for accessing the cell to initiate at least one traffic;
    an acquiring parameters means (670), for acquiring parameters from the call request, wherein the parameters includes SNR Eb/No, uplink rate $R_{up}$, downlink rate $R_{down}$, user ID and traffic type required by the at least one traffic in the call request;
    a signal processing means (680), for determining downlink path loss L of the traffic; calculating downlink climb power occurred after the at least one traffic being accessed, according to the parameters acquired by the acquiring means; calculating the downlink remaining power capacity; determining whether to admit the at least one traffic in downlink according to the downlink remaining power capacity and the downlink climb power, wherein admitting the at least one traffic in downlink when the downlink climb power is less than a downlink remaining power capacity, otherwise, rejecting to admit the at least one traffic;
    a control and processing means (710), for calculating uplink Rx power increment occurred after the at least one traffic being accessed, according to the parameters acquired by the acquiring means; calculating the uplink remaining power capacity; determining whether to admit the traffic in uplink according to the uplink remaining power capacity and the uplink Rx power increment, wherein admitting the at least one traffic in uplink when the uplink power increment is less than a uplink remaining power capacity, otherwise, rejecting to admit the at least one traffic;
    a link connection means (690), for establishing downlink and/or uplink if the at least one traffic is admitted by both the signal processing means and the control and processing means, otherwise, rejecting the call request;
    wherein the traffic type indicates the at least one traffic is a non real-time traffic or a real-time traffic, and when it is a non real-time traffic, the device further comprises:

        means for searching a transport format set of the at least one traffic, and taking lowest rate in the transport format set as the uplink rate $R_{up}$ or the downlink rate $R_{down}$.

20. The device according to claim 19, wherein the signal processing means comprises:

    transmission level determining means (682), for calculating processing gain and transmission level required by the at least one traffic in downlink;
    searching means (686), for searching measured downlink path loss reported by the user ID lately;
    first judging means (688), for judging whether the path loss is available and valid: if available and valid, taking the measured downlink path loss as the downlink path loss L of the traffic; otherwise, taking a first predefined value as the downlink path loss L.
    climb power determining means (684), for determining the downlink climb power after the at least one traffic being accessed, according to the parameters acquired by the acquiring means.

21. The device according to claim 20, wherein, according to the SNR Eb/No, the downlink rate $R_{down}$, the user ID and the traffic type required by the traffic, the climb power determining means estimates the downlink climb power as $\Delta P_{dBm}$ in dBm,

$$\Delta P_{dBm} = L - \left\{ 103dBm + \left[ P_G - \left( \frac{E_b}{N_0} \right)_{dB} \right] \right\},$$

wherein, $\left( \frac{E_b}{N_0} \right)_{dB}$ is the SNR Eb/No in dB, i.e. $\left( \frac{E_b}{N_0} \right)_{dB} = 10 \log_{10} \left( \frac{E_b}{N_0} \right)$ ,

$P_G$ is a processing gain and $P_G = 10 \times \log_{10} \left( \frac{3840kbps}{R} \right) dB$, where R is the downlink rate $R_{down}$ in kbps, and L is downlink path loss.

22. The device according to claim 21, wherein, when the at least one traffic includes data traffic( non-voice traffic) and/or voice traffic, the downlink climb power is modified to $\Delta P$ in mW:

$$\Delta P = 10^{0.1 \Delta P_{dBm}} \times \upsilon \quad mW$$

wherein, $\upsilon$ is voice activation factor, the value of which for the data traffic is different from that for the voice traffic.

23. The device according to claim 22, wherein, considering non-orthogonality of the physical code channels in downlink, the downlink climb power is modified to $\Delta P_{total}$ in mW by follow equation:

$$\Delta P_{total} = \left( \frac{E_b}{N_0} \times \alpha^2 + 1 \right) \Delta P \quad mW$$

wherein, $\alpha$ is a downlink non-orthogonal factor under multipath radio environment and dependent on specific radio environment.

24. The device according to claim 23, wherein, considering that transmission power of other channels will increase due to accessing the at least one traffic, the downlink climb power is further modified to $\Delta P_0$ in mW:

$$\Delta P_0' = \Delta P_0 + \Delta P_{total}$$

wherein $\Delta P_0 = P_0 \alpha^2$ mW,
Po is a total downlink transmitting power occurred before the at least one traffic being accessed,
$\alpha$ is a downlink non-orthogonal factor under multipath radio environment and dependent on the specific radio environment.

25. The device according to claim 24, wherein the first predetermined value is a path loss of an equivalent radius which is 70.7% of the maximum coverage radius of the cell, and is calculated by substituting the equivalent radius into a propagation model.

**26.** The device according to claim 19-25, wherein the control and processing means comprises:

Rx power determining means (713), for calculating an equivalent throughput according to measured total receiving power before the at least one traffic being accessed; obtaining the total throughput occurred after the traffic access by adding the uplink rate $R_{up}$ to the equivalent throughput; calculating the equivalent total receiving power occurred after the at least one traffic being accessed based on the total throughput occurred after the at least one traffic being accessed;

Second judging means (716), for obtaining the uplink Rx power increment by subtracting the measured total receiving power before traffic access from the equivalent total receiving power; obtaining the uplink remaining power capacity by subtracting the total receiving power measured before traffic access from the total receiving power allowed by the payload of the cell; determining whether the uplink remaining power capacity is greater than the uplink power climbing value; if greater, admitting the traffic, otherwise rejecting to admit it.

**27.** The device according to claim 26, wherein the second judging means (716) determines the uplink remaining power capacity according to the reserved power capacity for a soft handover.

**28.** An admission control method performed by a base station in a CDMA system, for controlling a mobile station to access a cell for which the base station is serving, wherein the method comprises the steps of:

receiving, from the mobile station, a call request for accessing the cell to initiate at least one traffic;

acquiring parameters from the call request, wherein the parameters include SNR Eb/No, downlink source rate $R_{down}$, user ID and traffic type required by the at least one traffic;

estimating, according to the acquired parameters, a downlink climb power occurred after the at least one traffic being accessed based on the acquired parameters, when the downlink rate of the at least one traffic is non-zero, determining whether to admit the at least one traffic in downlink based on the estimated downlink climb power;

judging whether the at least one traffic can be admitted in the downlink according to the calculated available remaining downlink capacity of the cell; admitting the at least one traffic in downlink, if the downlink climb power is less than the downlink remaining power capacity, otherwise, reject the at least one traffic;

wherein the traffic type indicates the at least one traffic is a non real-time traffic or a real-time traffic, and when it is a non real-time traffic, the method further comprises:

searching a transport format set of the at least one traffic, and taking lowest rate in the transport format set as the downlink rate $R_{down}$

**29.** An admission control method performed by a base station in a CDMA system, for controlling a mobile station to access a cell for which the base station is serving, wherein the method comprises the steps of:

receiving, from the mobile station, a call request for accessing the cell to initiate at least one traffic;

acquiring parameters from the call request, wherein the parameters include SNR Eb/No, uplink source rate $R_{up}$, user ID and traffic type required by the at least one traffic;

determining whether to admit the at least one traffic in uplink based on the uplink climb power uplink Rx power increment, wherein admitting the at least one traffic in uplink when the uplink power increment is less than a uplink remaining power capacity, otherwise, rejecting to admit the at least one traffic;

wherein the traffic type indicates the at least one traffic is a non real-time traffic or a real-time traffic, and when it is a non real-time traffic, the method further comprises:

searching a transport format set of the at least one traffic, and taking lowest rate in the transport format set as the uplink rate $R_{up}$.

**Patentansprüche**

**1.** Zulassungssteuerverfahren, das von einer Basisstation (610) in einem CDMA-System durchgeführt wird, zum Steuern einer Mobilstation (620), um auf eine Zelle zuzugreifen, die die Basisstation (610) bedient, wobei das Verfahren die Schritte umfasst:

a) Empfangen einer Rufanforderung von der Mobilstation (620) zum Zugreifen auf die Zelle, um mindestens einen Verkehr zu initiieren;

b) Erfassen von Parametern von der Rufanforderung, wobei die Parameter das SNR Eb/No, die Aufwärtsstrecken-Quellenübertragungsrate $R_{up}$ und/oder die Abwärtsstrecken-Quellenübertragungsrate $R_{down}$, die Anwender-ID und den Verkehrstyp, der von dem mindestens einen Verkehr angefordert wird, enthalten;

c) entsprechend den erfassten Parametern Schätzen einer Abwärtsstreckenkletterleistung, die auftritt, nachdem auf den mindestens einen Verkehr zugegriffen worden ist, und Bestimmen, ob der mindestens eine Abwärtsstreckenverkehr auf der Grundlage der Abwärtsstreckenkletterleistung zuzulassen ist, wenn die Abwärtsstrecken-Übertragungsrate des mindestens einen Verkehrs von Null verschieden ist, wobei ein Zulassen des mindestens einen Abwärtsstreckenverkehrs erfolgt, wenn die Abwärtsstreckenkletterleistung kleiner ist als eine verbleibende Abwärtsstrecken-Leistungskapazität, und andernfalls ein Abweisen erfolgt, den mindestens einen Verkehr zuzulassen;

d) entsprechend den erfassten Parametern Schätzen einer Aufwärtsstrecken-Leistungserhöhung Rx, die auftritt, nachdem auf den mindestens einen Verkehr zugegriffen worden ist, und Bestimmen, ob der mindestens eine Verkehr in Aufwärtsstreckenrichtung auf der Grundlage der Aufwärtsstrecken-Leistungserhöhung Rx zuzulassen ist, wobei ein Zulassen des mindestens einen Verkehrs in Aufwärtsstreckenrichtung erfolgt, wenn die Aufwärtsstrecken-Leistungserhöhung kleiner ist als eine verbleibende Aufwärtsstrecken-Leistungskapazität, und andernfalls ein Abweisen erfolgt, den mindestens einen Verkehr zuzulassen;

e) Aufbauen einer Aufwärtsstrecke und/oder einer Abwärtsstrecke für den mindestens einen Verkehr, wenn der mindestens eine Verkehr sowohl in Aufwärtsstreckenrichtung als auch in Abwärtsstreckenrichtung zugelassen ist, andernfalls Abweisen der Rufanforderung,

wobei der Verkehrstyp angibt, dass der mindestens eine Verkehr ein Nicht-Echtzeitverkehr oder ein Echtzeitverkehr ist, wobei das Verfahren dann, wenn er ein Nicht-Echtzeitverkehr ist, ferner umfasst:

Suchen eines Transportformatsatzes des mindestens einen Verkehrs und Aufnehmen der niedrigsten Übertragungsrate in den Transportformatsatz als die Aufwärtsstrecken-Übertragungsrate $R_{up}$ oder die Abwärtsstrecken-Übertragungsrate $R_{down}$.

2. Verfahren nach Anspruch 1, wobei gemäß dem SNR Eb/No, der Abwärtsstrecken-Übertragungsrate $R_{down}$, der Anwender-ID und dem Verkehrstyp, der von dem mindestens einen Verkehr angefordert wird, die Abwärtsstreckenkletterleistung des Schrittes (c) als $\Delta P_{dBm}$ in dBm geschätzt wird

$$\Delta P_{dBm} = L - \left\{ 103 dBm + \left[ P_G - \left( \frac{E_b}{N_0} \right)_{dB} \right] \right\},$$

wobei

$$\left( \frac{E_b}{N_0} \right)_{dB}$$

das SNR Eb/No in dB ist, d.h.

$$\left( \frac{E_b}{N_0} \right)_{dB} = 10 \log_{10} \left( \frac{E_b}{N_0} \right),$$

$P_G$ eine Verarbeitungsverstärkung ist und

$$P_G = 10 \times \log_{10} \left( \frac{3840 kbps}{R} \right) dB,$$

wobei $R$ die Abwärtsstrecken-Übertragungsrate $R_{down}$ in kbps ist und L der Abwärtsstrecken-Pfadverlust ist.

3. Verfahren nach Anspruch 2, wobei die Abwärtsstreckenkletterleistung zu $\Delta P$ modifiziert wird, wenn der mindestens eine Verkehr Datenverkehr (Nicht-Sprachverkehr) und/oder Sprachverkehr enthält:

$$\Delta P = 10^{0.1\Delta P_{dBm}} \times \upsilon \quad \mathrm{mW}$$

wobei $\upsilon$ ein Sprachaktivierungsfaktor ist, dessen Wert für den Datenverkehr verschieden von jenem für den Sprachverkehr ist.

4. Verfahren nach Anspruch 3, wobei bei einer Betrachtung der Nicht-Orthogonalität der physikalischen Codekanäle in Abwärtsstreckenrichtung die Abwärtsstreckenkletterleistung modifiziert wird zu $\Delta P_{total}$:

$$\Delta P_{total} = \left( \frac{E_b}{N_0} \times \alpha^2 + 1 \right) \Delta P \quad \mathrm{mW}$$

wobei $\alpha$ ein nicht-orthogonaler Abwärtsstrecken-Faktor unter einer Mehrwegfunkumgebung ist und abhängig von der spezifischen Funkumgebung ist.

5. Verfahren nach Anspruch 4, wobei die Abwärtsstreckenkletterleistung ferner modifiziert wird zu $\Delta P_0$ in mW, wenn in Erwägung gezogen wird, dass die Übertragungsleistung der anderen Kanäle auf Grund des Zugriffs des mindestens einen Verkehrs anwachsen wird:

$$\Delta \dot{P}_0' = \Delta \dot{P}_0 + \Delta P_{total}$$

wobei $\Delta P_0 = P_{0\alpha}^2$ mW,
Po eine gesamte Übertragungsleistung ist, die auftritt, bevor auf den mindestens einen Verkehr zugegriffen worden ist,
$\alpha$ ein nicht-orthogonaler Abwärtsstrecken-Faktor unter einer Mehrwegfunkumgebung ist und von der spezifischen Funkumgebung abhängt.

6. Verfahren nach Anspruch 2, das ferner umfasst:

Suchen nach einem gemessenen Abwärtsstrecken-Pfadverlust, der in letzter Zeit von den Mobilstationen berichtet worden ist, in einer Datenbank durch Verwendung der Anwender-ID;
Bestimmen, ob der gemessene Abwärtsstrecken-Pfadverlust verfügbar und gültig ist;
Aufnehmen des gemessenen Abwärtsstrecken-Pfadverlusts, wenn er verfügbar und gültig ist, als den Pfadverlust in Abwärtsrichtung.

7. Verfahren nach Anspruch 6, wobei der Abwärtsstrecken-Pfadverlust gleich einem Pfadverlust eines äquivalenten Radius ist, der 70,7 % des maximalen Abdeckungsradius der Zelle ausmacht, wenn der gemessene Abwärtsstrecken-Pfadverlust ungültig oder nicht verfügbar ist, wobei der Pfadverlust eines äquivalenten Radius berechnet wird, indem der äquivalente Radius in ein Ausbreitungsmodell eingegeben wird.

8. Verfahren nach Anspruch 6, wobei der gemessene Abwärtsstrecken-Pfadverlust nicht verfügbar oder ungültig ist, wenn die Mobilstation dabei versagt, den gemessenen Abwärtsstrecken-Pfadverlust innerhalb einer vorbestimmten Periode zu berichten.

9. Verfahren nach Anspruch 8, wobei der gemessene Abwärtsstrecken-Pfadverlust, der von der Mobilstation innerhalb einer vorbestimmten Periode berichtet wird, nicht verfügbar oder ungültig ist, wenn der gemessene Abwärtsstrecken-Pfadverlust größer ist als eine zweite vorbestimmte Periode.

**10.** Verfahren nach Anspruch 9, wobei der zweite vorbestimmte Wert ein Pfadverlust eines äquivalenten Radius ist, der das 1,4fache des maximalen Abdeckungsradius der Zelle ist, und der Pfadverlust des äquivalenten Radius berechnet wird, indem der äquivalente Radius in ein Ausbreitungsmodell eingegeben wird.

**11.** Verfahren nach Anspruch 1, wobei der Schritt (c) ferner umfasst:

Berechnen der verbleibenden Abwärtsstrecken-Leistungskapazität entsprechend der berichteten Nutzlastleistung durch ein praktisches Messen und die maximale Abwärtsstrecken- Nutzlastleistung der Zelle;
Beurteilen, ob die Abwärtsstreckenkletterleistung kleiner ist als die verbleibende Abwärtsstrecken-Leistungskapazität;
Zulassen des mindestens einen Verkehrs in Abwärtsstreckenrichtung, wenn die Abwärtsstreckenkletterleistung kleiner ist als die verbleibende Abwärtsstrecken-Leistungskapazität, andernfalls Abweisen des Zulassens des mindestens einen Verkehrs.

**12.** Verfahren nach Anspruch 11, wobei die maximale Abwärtsstrecken-Nutzlastleistung entsprechend der Abwärtsstrecken-Leistungskapazität, die für einen Soft-Schalter reserviert ist, bestimmt wird.

**13.** Verfahren nach einem der Ansprüche 1 bis 12, wobei der Schritt (d) umfasst:

(d1) Schätzen des Aufwärtsstrecken-Durchsatzes, der auftritt, nachdem auf den mindestens einen Verkehr zugegriffen worden ist, entsprechend der Aufwärtsstrecken-Übertragungsrate $R_{up}$ und einer gemessenen gesamten Aufwärtsstrecken-Empfangs(Interferenz)leistung $P_{total}$, die gemessen wird, bevor auf den mindestens einen Verkehr zugegriffen wird;
(d2) Berechnen der Aufwärtsstrecken-Leistungserhöhung Rx, die auftritt, nachdem auf den mindestens einen Verkehr zugegriffen worden ist, entsprechend des geschätzten Aufwärtsstrecken-Durchsatzes;
(d3) Beurteilen, ob die Aufwärtsstrecken-Leistungserhöhung Rx kleiner ist als die verbleibende Aufwärtsstrecken-Leistungskapazität;
(d4) Zulassen des mindestens einen Aufwärtsstreckenverkehrs, wenn die Aufwärtsstrecken-Leistungserhöhung kleiner ist als die verbleibende Aufwärtsstrecken-Leistungskapazität, andernfalls Abweisen des Zulassens des mindestens einen Verkehrs;

**14.** Verfahren nach Anspruch 13, wobei in dem Schritt (d1) der Aufwärtsstrecken-Durchsatz, der auftritt, nachdem auf den mindestens einen Verkehr zugegriffen worden ist, eine Summe aus der Aufwärtsstrecken-Übertragungsrate $R_{up}$ des mindestens einen Verkehrs und eines äquivalenten Aufwärtsstrecken-Durchsatzes $T_{total}$, der von der gemessenen, gesamten Aufwärtsstrecken-Empfangsleistung $P_{total}$, berechnet wird, ist.

**15.** Verfahren nach Anspruch 14, wobei die Beziehung zwischen dem äquivalenten Aufwärtsstrecken-Durchsatz $T_{total}$ und der gemessenen, gesamten Aufwärtsstrecken-Empfangsleistung $P_{total}$ gemäß den folgenden Gleichungen definiert ist:

für Sprachverkehr:

$$P_{total} = \frac{P_N}{\left(T_{total} - T_x\right)^2}$$

für Datenverkehr:

$$P_{total} = \frac{P_N}{\left(T_{total} - T_x\right)^{3/2}}$$

wobei $T_x$ (kbps) der maximale Durchsatz der Leistungskapazität an Nutzlastleistung ist;
$P_N$ die Leistung des weißen Rauschens ist.

**16.** Verfahren nach Anspruch 15, wobei der Schritt (d2) ferner umfasst:

Berechnen einer äquivalenten gesamten Empfangsleistung, die auftritt, nachdem auf den mindestens einen Verkehr zugegriffen worden ist, entsprechend dem geschätzten Aufwärtsstrecken-Durchsatz;

Erreichen der Aufwärtsstrecken-Leistungserhöhung Rx durch ein Subtrahieren der gemessenen, gesamten Aufwärtsstrecken-Empfangsleistung $P_{total}$ von der berechneten gesamten Empfangsleistung, die auftritt, nachdem auf den mindestens einen Verkehr zugegriffen worden ist.

**17.** Verfahren nach Anspruch 16, wobei der Schritt (d3) ferner umfasst:

Erreichen der verbleibenden Aufwärtsstrecken-Leistungskapazität, indem von der maximalen gesamten Aufwärtsstrecken-Empfangsleistung, die von der Nutzlast der Zelle zugelassen ist, die gemessene, gesamte Aufwärtsstrecken-Empfangsleistung subtrahiert wird.

**18.** Verfahren nach Anspruch 17, wobei die maximale gesamte Aufwärtsstrecken-Empfangsleistung, die von der Nutzlast der Zelle zugelassen ist, entsprechend der Kapazität, die für einen Soft-Schalter reserviert ist, bestimmt wird.

**19.** Zulassungssteuervorrichtung in einem CDMA-System zum Steuern einer Mobilstation, um auf eine Zelle zuzugreifen, die die Basisstation bedient, wobei die Vorrichtung enthält:

Empfangsmittel (650), um von der Mobilstation eine Rufanforderung zum Zugreifen auf die Zelle zu empfangen, um mindestens einen Verkehr zu initiieren;

Mittel (670) zum Erfassen von Parametern, um Parameter von der Rufanforderung zu erfassen, wobei die Parameter das SNR Eb/No, die Aufwärtsstrecken-Übertragungsrate $R_{up}$, die Abwärtsstrecken-Übertragungsrate $R_{down}$, die Anwender-ID und den Verkehrstyp, der von dem mindestens einen Verkehr in der Rufanforderung angefordert wird, enthalten;

ein Mittel (680) zur Signalverarbeitung zum Bestimmen des Abwärtsstrecken-Pfadverlustes L des Verkehrs; Berechnen der Abwärtsstreckenkletterleistung, die auftritt, nachdem auf den mindestens einen Verkehr zugegriffen worden ist, entsprechend den Parametern, die durch die Erfassungsmittel erfasst worden sind; Berechnen der verbleibenden Abwärtsstrecken-Leistungskapazität; Bestimmen, ob der mindestens eine Abwärtsstreckenverkehr entsprechend der verbleibenden Abwärtsstrecken-Leistungskapazität und der Abwärtsstreckenkletterleistung zuzulassen ist, wobei ein Zulassen des mindestens einen Abwärtsstreckenverkehrs erfolgt, wenn die Abwärtsstreckenkletterleistung kleiner ist als eine verbleibende Abwärtsstrecken-Leistungskapazität, und andernfalls ein Abweisen erfolgt, den mindestens einen Verkehr zuzulassen;

Steuer- und Verarbeitungsmittel (710) zum Berechnen der Aufwärtsstrecken-Leistungserhöhung Rx, die auftritt, nachdem auf den mindestens einen Verkehr zugegriffen worden ist, entsprechend den Parametern, die von den Erfassungsmitteln erfasst worden sind; Berechnen der verbleibenden Aufwärtsstrecken-Leistungskapazität; Bestimmen, ob der Aufwärtsstreckenverkehr entsprechend der verbleibenden Aufwärtsstrecken-Leistungskapazität und der Aufwärtsstrecken-Leistungserhöhung Rx zuzulassen ist, wobei ein Zulassen des mindestens einen Aufwärtsstreckenverkehrs erfolgt, wenn die Aufwärtsstrecken-Leistungserhöhung kleiner ist als eine verbleibende Aufwärtsstrecken-Leistungskapazität, und andernfalls ein Abweisen erfolgt, den mindestens einen Verkehr zuzulassen;

Streckenverbindungmittel (690) zum Abwärtsstrecken-Aufbau und/oder Aufwärtsstrecken-Aufbau, wenn der mindestens eine Verkehr sowohl von den Mitteln zur Signalverarbeitung als auch von den Steuer- und Verarbeitungsmitteln zugelassen wird, andernfalls zum Abweisen der Rufanforderung;

wobei der Verkehrstyp angibt, dass der mindestens eine Verkehr ein Nicht-Echtzeitverkehr oder ein Echtzeitverkehr ist, wobei die Vorrichtung dann, wenn er ein Nicht-Echtzeitverkehr ist, ferner umfasst :

Mittel zum Suchen eines Transportformatsatzes des mindestens einen Verkehrs und die Aufnahme der niedrigsten Übertragungsrate in den Transportformatsatz als die Aufwärtsstrecken-Übertragungsrate $R_{up}$ oder die Abwärtsstrecken-Übertragungsrate $R_{down}$.

**20.** Vorrichtung nach Anspruch 19, wobei die Mittel zur Signalverarbeitung umfassen:

Sendepegelbestimmungsmittel (682) zum Berechnen der Verarbeitungsverstärkung und des Sendepegels, der für den mindestens einen Abwärtsstreckenverkehr erforderlich ist;

Suchmittel (686) zum Suchen nach einem gemessenen Abwärtsstrecken-Pfadverlust, der von der Anwender-ID in letzter Zeit berichtet worden ist;

erste Beurteilungsmittel (688) zum Beurteilen, ob der Pfadverlust verfügbar und gültig ist: wenn er verfügbar und gültig ist, Aufnehmen des gemessenen Abwärtsstrecken-Pfadverlusts als den Abwärtsstrecken-Pfadverlust L des Verkehrs,

Mittel (684) zum Bestimmen der Kletterleistung, um die Abwärtsstreckenkletterleistung zu bestimmen, nachdem auf den mindestens einen Verkehr zugegriffen worden ist, entsprechend den Parametern, die von den Erfassungsmitteln erfasst worden sind.

**21.** Vorrichtung nach Anspruch 20, wobei gemäß dem SNR Eb/No, der Abwärtsstrecken-Übertragungsrate $R_{down}$, der Anwender-ID und dem Verkehrstyp, der von dem Verkehr angefordert wird, die Mittel zum Bestimmen der Kletterleistung die Abwärtsstreckenkletterleistung als $\Delta P_{dBm}$ in dBm schätzen,

$$\Delta P_{dBm} = L - \left\{ 103dBm + \left[ P_G - \left( \frac{E_b}{N_0} \right)_{dB} \right] \right\},$$

wobei

$$\left( \frac{E_b}{N_0} \right)_{dB}$$

die SNR Eb/No in dB ist, d.h.

$$\left( \frac{E_b}{N_0} \right)_{dB} = 10 \log_{10} \left( \frac{E_b}{N_0} \right),$$

$P_G$ eine Verarbeitungsverstärkung ist und

$$P_G = 10 \times \log_{10} \left( \frac{3840kbps}{R} \right) dB,$$

wobei $R$ die Abwärtsstrecken-Übertragungsrate $R_{down}$ in kbps ist und L der Abwärtsstrecken-Pfadverlust ist.

**22.** Vorrichtung nach Anspruch 21, wobei die Abwärtsstreckenkletterleistung zu $\Delta P$ in mW modifiziert wird, wenn der mindestens eine Verkehr Datenverkehr (Nicht-Sprachverkehr) und/oder Sprachverkehr enthält:

$$\Delta P = 10^{0.1 \Delta P_{dBm}} \times \upsilon \quad mW$$

wobei $\upsilon$ ein Sprachaktivierungsfaktor ist, dessen Wert für den Datenverkehr verschieden von dem für den Sprachverkehr ist.

**23.** Vorrichtung nach Anspruch 22, wobei bei einer Betrachtung der Nicht-Orthogonalität der physikalischen Codekanäle in Abwärtsstreckenrichtung die Abwärtsstreckenkletterleistung gemäß der folgenden Gleichung modifiziert wird zu $\Delta P_{total}$:

$$\Delta P_{total} = \left( \frac{E_b}{N_0} \times \alpha^2 + 1 \right) \Delta P \quad \text{mW}$$

wobei $\alpha$ ein nicht-orthogonaler Abwärtsstrecken-Faktor unter einer Mehrwegfunkumgebung ist und von der spezifischen Funkumgebung abhängt.

24. Vorrichtung nach Anspruch 23, wobei die Abwärtsstreckenkletterleistung ferner modifiziert wird zu $\Delta P_0$ in mW, wenn in Erwägung gezogen wird, dass die Übertragungsleistung der anderen Kanäle auf Grund des Zugriffs des mindestens einen Verkehrs anwachsen wird:

$$\Delta \dot{P}_0{}' = \Delta P_0 + \Delta P_{total}$$

wobei $\Delta P_0 = P_0 \alpha^2$ mW,
$P_0$ eine gesamte Übertragungsleistung ist, die auftritt, bevor auf den mindestens einen Verkehr zugegriffen worden ist,
$\alpha$ ein nicht-orthogonaler Abwärtsstrecken-Faktor unter einer Mehrwegfunkumgebung ist und von der spezifischen Funkumgebung abhängt.

25. Vorrichtung nach Anspruch 24, wobei der erste vorbestimmte Wert ein Pfadverlust eines äquivalenten Radius ist, der 70,7 % des maximalen Abdeckungsradius der Zelle ausmacht, und der berechnet wird, indem der äquivalente Radius in ein Ausbreitungsmodell eingegeben wird.

26. Vorrichtung nach Anspruch 19 bis 25, wobei die Steuer- und Verarbeitungsmittel enthalten:

Mittel (713) zum Bestimmen der Rx-Leistung, um einen äquivalenten Durchsatz entsprechend der gemessenen, gesamten Empfangsleistung zu berechnen, bevor auf den mindestens einen Verkehr zugegriffen wird; zum Erhalten des gesamten Durchsatzes, der nach dem Verkehrszugriff auftritt, indem die Aufwärtsstrecken-Übertragungsrate $R_{up}$ zu dem äquivalenten Durchsatz hinzuaddiert wird; Berechnen der äquivalenten gesamten Empfangsleistung, die auftritt, nachdem auf den mindestens einen Verkehr zugegriffen worden ist, auf der Grundlage des gesamten Durchsatzes, der auftritt, nachdem auf den mindestens einen Verkehr zugegriffen worden ist.
zweite Beurteilungsmittel (716), um die Aufwärtsstrecken-Leistungserhöhung Rx durch ein Subtrahieren der gemessenen, gesamten Empfangsleistung vor dem Verkehrszugriff von der äquivalenten, gesamten Empfangsleistung zu erhalten; Erhalten der verbleibenden Aufwärtsstrecken-Leistungskapazität durch ein Subtrahieren der gesamten Empfangsleistung, die vor dem Verkehrszugriff gemessenen worden ist, von der gesamten Empfangsleistung, die von der Nutzlast der Zelle zugelassen ist; Bestimmen, ob die verbleibende Aufwärtsstrecken-Leistungskapazität größer ist als der Aufwärtsstreckenkletterleistungswert; wenn sie größer ist, Zulassen des Verkehrs, andernfalls Abweisen seines Zulassens.

27. Vorrichtung nach Anspruch 26, wobei die Beurteilungsmittel (716) die verbleibende Aufwärtsstrecken-Leistungskapazität entsprechend der reservierten Leistungskapazität für eine Soft-Übergabe bestimmen.

28. Zulassungssteuerverfahren, das von einer Basisstation in einem CDMA-System durchgeführt wird, zum Steuern einer Mobilstation, um auf eine Zelle zuzugreifen, die die Basisstation bedient, wobei das Verfahren die Schritte umfasst:

Empfangen einer Rufanforderung von der Mobilstation zum Zugreifen auf die Zelle, um mindestens einen Verkehr zu initiieren;
Erfassen von Parametern von der Rufanforderung, wobei die Parameter das SNR Eb/No, die Abwärtsstrecken-Quellenübertragungsrate $R_{down}$, die Anwender-ID und den Verkehrstyp, der von dem mindestens einen Verkehr angefordert wird, enthalten;
entsprechend den erfassten Parametern Schätzen einer Abwärtsstreckenkletterleistung, die auftritt, nachdem auf den mindestens einen Verkehr zugegriffen worden ist, auf der Grundlage der erfassten Parameter, wenn die Abwärtsstrecken-Übertragungsrate des mindestens einen Verkehrs von Null verschieden ist,

EP 1 463 356 B1

Bestimmen, ob der mindestens eine Abwärtsstreckenverkehr auf der Grundlage der geschätzten Abwärtsstrekkenkletterleistung zuzulassen ist,

Beurteilen, ob der mindestens eine Verkehr in der Abwärtsstreckenrichtung entsprechend der berechneten, verfügbare, verbleibenden Abwärtsstrecken-Kapazität der Zelle zugelassen werden kann; Zulassen des mindestens einen Abwärtsstreckenverkehrs, wenn die Abwärtsstreckenkletterleistung kleiner ist als die verbleibende Abwärtsstrecken-Leistungskapazität, andernfalls Abweisen der Zulassung für den mindestens einen Verkehr; wobei der Verkehrstyp angibt, dass der mindestens eine Verkehr ein Nicht-Echtzeitverkehr oder ein Echtzeitverkehr ist, wobei das Verfahren dann, wenn er ein Nicht-Echtzeitverkehr ist, ferner umfasst:

Suchen eines Transportformatsatzes des mindestens einen Verkehrs und Aufnehmen der niedrigsten Übertragungsrate in den Transportformatsatz als die Abwärtsstrecken-Übertragungsrate $R_{down}$.

29. Zulassungssteuerverfahren, das von einer Basisstation in einem CDMA-System durchgeführt wird, zum Steuern einer Mobilstation, um auf eine Zelle zuzugreifen, die die Basisstation bedient, wobei das Verfahren die Schritte umfasst:

Empfangen einer Rufanforderung von der Mobilstation zum Zugreifen auf die Zelle, um mindestens einen Verkehr zu initiieren;

Erfassen von Parametern von der Rufanforderung, wobei die Parameter das SNR Eb/No, die Aufwärtsstrecken-Quellenübertragungsrate $R_{up}$, die Anwender-ID und den Verkehrstyp, der von dem mindestens einen Verkehr angefordert wird, enthalten;

Bestimmen auf der Grundlage der Leistungserhöhung der Aufwärtsstreckenkletterleistung Rx, ob der mindestens eine Verkehr in Aufwärtsstreckenrichtung zuzulassen ist, wobei ein Zulassen des mindestens einen Verkehrs in Aufwärtsstreckenrichtung erfolgt, wenn die Aufwärtsstrecken-Leistungserhöhung kleiner ist als eine verbleibende Aufwärtsstrecken-Leistungskapazität, andernfalls Abweisen des Zulassens des mindestens einen Verkehrs;

wobei der Verkehrstyp angibt, dass der mindestens eine Verkehr ein Nicht-Echtzeitverkehr oder ein Echtzeitverkehr ist, wobei das Verfahren dann, wenn er ein Nicht-Echtzeitverkehr ist, ferner umfasst:

Suchen eines Transportformatsatzes des mindestens einen Verkehrs und Aufnehmen der niedrigsten Übertragungsrate in den Transportformatsatz als die Aufwärtsstrecken-Übertragungsrate $R_{up}$.

## Revendications

1. Procédé de contrôle d'admission effectué par une station de base (610) dans un système CDMA, permettant de contrôler une station mobile (620) lors de l'accès à une cellule qui est desservie par la station de base (610), dans lequel le procédé comprend les étapes consistant en:

a) la réception, à partir de la station mobile (620), d'une demande d'appel afin d'avoir accès à la cellule pour initier au moins un service;

b) l'acquisition de paramètres à partir de la demande d'appel, dans lesquels les paramètres incluent un RSB rapport porteuse/densité de bruit, la vitesse de génération en liaison montante $R_{up}$ et/ou la vitesse de génération en liaison descendante $R_{down}$, l'ID de l'utilisateur et le type de service demandé par le au moins un service;

c) l'estimation, en fonction des paramètres acquis, d'une puissance d'augmentation en liaison descendante intervenue après l'accès à au moins un service, et la décision d'admettre ou non le au moins un service en liaison descendante, en se fondant sur la puissance d'augmentation en liaison descendante, lorsque la vitesse en liaison descendante du au moins un service est non égale à zéro, l'admission du au moins un service en liaison descendante lorsque la puissance d'augmentation en liaison descendante est inférieure à une capacité de puissance en liaison descendante restante, ou bien le refus d'admettre le au moins un service;

d) l'estimation, en fonction des paramètres acquis, d'une augmentation de puissance de réception en liaison montante intervenue après l'accès à au moins un service, et la décision d'admettre ou non le au moins un service en liaison montante en se fondant sur l'augmentation de puissance de réception en liaison montante, l'admission du au moins un service en liaison montante lorsque l'augmentation de puissance en liaison montante est inférieure à une capacité de puissance en liaison montante restante, ou bien le refus d'admettre le au moins un service;

e) l'établissement d'une liaison montante et/ou d'une liaison descendante pour le au moins un service admis, si le au moins un service est admis à la fois en liaison montante et en liaison descendante, sinon le rejet de la demande d'appel,

dans lequel le type de service indique si le au moins un service est un service en temps non réel ou un service en temps réel, et lorsqu'il s'agit d'un service en temps non réel, le procédé comprend en outre:

la recherche d'un format de transport du au moins un service et considérer la vitesse la plus basse dans le format de transport comme étant la vitesse de génération en liaison montante $R_{up}$ ou la vitesse de génération en liaison descendante $R_{down}$.

2. Procédé selon la revendication 1, dans lequel, en fonction du RSB rapport porteuse/densité de bruit, de la vitesse en liaison descendante $R_{down}$, de l'ID de l'utilisateur et du type de service demandé par le au moins un service, la puissance d'augmentation en liaison descendante de l'étape (c) est estimée à $\Delta P_{dBm}$ en dBm,

$$\Delta P_{dBm} = L - \left\{ 103dBm + \left[ P_G - \left( \frac{E_b}{N_0} \right)_{dB} \right] \right\},$$

dans laquelle $\left( \dfrac{E_b}{N_0} \right)_{dB}$ est le RSB rapport porteuse/densité de bruit en dB, c'est-à-dire que

$$\left( \frac{E_b}{N_0} \right)_{dB} = 10 \log_{10} \left( \frac{E_b}{N_0} \right)$$

PG est un gain de conditionnement et $P_G = 10 \times \log_{10}(\frac{3840kbps}{R})$ dB, où R est la vitesse en liaison descendante $R_{down}$ en kbps, et L est un affaiblissement de propagation en liaison descendante.

3. Procédé selon la revendication 2, dans lequel, lorsque le au moins un service inclut un service de données (service non vocal) et/ou un service vocal, la puissance d'augmentation en liaison descendante est modifiée en $\Delta P$:

$$\Delta P = 10^{0.1\Delta P_{dBm}} \times \upsilon \quad \text{mW}$$

dans laquelle $\upsilon$ est un facteur d'activation par la voix, dont la valeur pour le service de données est différente de celle pour le service vocal.

4. Procédé selon la revendication 3, dans lequel, lorsqu'on considère mode non orthogonal sur les canaux physiques de code en liaison descendante, la puissance d'augmentation en liaison descendante est modifiée en $\Delta P_{total}$:

$$\Delta P_{total} = \left( \frac{E_b}{N_0} \times \alpha^2 + 1 \right) \Delta P \quad \text{mW}$$

où $\alpha$ est un facteur en mode non orthogonal en liaison descendante dans un environnement radio multivoie et dépendant d'un environnement radio spécifique.

**5.** Procédé selon la revendication 4 dans lequel, si l'on considère que la puissance de transmission d'autres canaux augmente du fait de l'accès à au moins un service, la puissance d'augmentation en liaison descendante est en outre modifiée en $\Delta P_0'$ en mW:

$$\Delta \dot{P}_0' = \Delta P_0 + \Delta P_{total}$$

$$\Delta P_0 = P_0 \alpha^2 \text{ mW,}$$

où

$P_0$ est une puissance totale de transmission en liaison descendante intervenue avant l'accès à au moins un service, $\alpha$ est un facteur en mode non orthogonal en liaison descendante dans un environnement radio multivoie et dépendant d'un environnement radio spécifique.

**6.** Procédé selon la revendication 2, comprenant en outre:

la recherche d'un affaiblissement de propagation en liaison descendante mesuré, signalé récemment par la station mobile, dans une base de données grâce à l'utilisation de l'ID de l'utilisateur;
le fait de déterminer si l'affaiblissement de propagation en liaison descendante mesuré est disponible et valide;
la prise en considération de l'affaiblissement de propagation en liaison descendante mesuré, s'il est disponible et valide, comme étant l'affaiblissement de propagation en liaison descendante.

**7.** Procédé selon la revendication 6, dans lequel l'affaiblissement de propagation en liaison descendante est égal à un affaiblissement de propagation d'un rayon équivalent, qui est égal à 70,7 % du rayon maximum de couverture de la cellule, si l'affaiblissement de propagation en liaison descendante mesuré est invalide ou indisponible, dans lequel l'affaiblissement de propagation d'un rayon équivalent est calculé en substituant le rayon équivalent dans un modèle de propagation.

**8.** Procédé selon la revendication 6, dans lequel l'affaiblissement de propagation en liaison descendante mesuré est indisponible ou invalide, si la station mobile omet de signaler l'affaiblissement de propagation en liaison descendante mesuré pendant une période prédéterminée.

**9.** Procédé selon la revendication 8, dans lequel l'affaiblissement de propagation en liaison descendante mesuré, signalé par la station mobile pendant la période prédéterminée, est indisponible ou invalide, si l'affaiblissement de propagation en liaison descendante mesuré est supérieur à une deuxième valeur prédéterminée.

**10.** Procédé selon la revendication 9, dans lequel la deuxième valeur prédéterminée est un affaiblissement de propagation d'un rayon équivalent, qui est égal à 1,4 fois le rayon maximum de couverture de la cellule, et l'affaiblissement de propagation du rayon équivalent est calculé en substituant le rayon équivalent dans un modèle de propagation.

**11.** Procédé selon la revendication 1, dans lequel l'étape (c) comprend en outre:

le calcul de la capacité de puissance en liaison descendante restante, en fonction de la puissance de charge signalée grâce à une mesure pratique et la puissance de charge maximum en liaison descendante de la cellule;
le fait de juger si la puissance d'augmentation en liaison descendante est inférieure à la capacité de puissance en liaison descendante restante;
l'admission du au moins un service en liaison descendante, si la puissance d'augmentation en liaison descendante est inférieure à la capacité de puissance en liaison descendante restante, sinon, le refus d'admettre le au moins un service.

**12.** Procédé selon la revendication 11, dans lequel la puissance de charge maximum en liaison descendante est déterminée en fonction de la capacité de puissance en liaison descendante réservée pour le softswitch.

13. Procédé selon l'une quelconque des revendications 1 à 12, dans lequel l'étape (d) comprend:

(d1) l'estimation d'un débit en liaison montante intervenu après l'accès à au moins un service, en fonction de la vitesse en liaison montante $R_{up}$ et une puissance totale de réception (interférence) en liaison montante mesurée $P_{totale}$ qui est mesurée avant l'accès à au moins un service;

(d2) le calcul de l'augmentation de puissance de réception Rx en liaison montante intervenue après l'accès à au moins un service, en fonction du débit en liaison montante estimé;

(d3) le fait d'estimer si l'augmentation de puissance de réception Rx en liaison montante est inférieure à la capacité de puissance en liaison montante restante;

(d4) l'admission du au moins un service en liaison montante, si l'augmentation de puissance en liaison descendante est inférieure à la capacité de puissance de charge maximum en liaison montante, sinon, le refus d'admettre le au moins un service.

14. Procédé selon la revendication 13, dans lequel, à l'étape (d1), le débit en liaison montante intervenu après l'accès à au moins un service est une somme de la vitesse en liaison montante $R_{up}$ du au moins un service et un débit en liaison montante équivalent $T_{total}$ calculé à partir de la puissance totale de réception en liaison montante mesurée $P_{total}$.

15. Procédé selon la revendication 14, dans lequel la relation entre le débit en liaison montante équivalent $T_{total}$ et la puissance totale de réception en liaison montante mesurée $P_{total}$ est définie par les équations suivantes:

pour le service vocal:

$$P_{total} = \frac{P_N}{\left(T_{total} - T_x\right)^2}$$

pour le service de données:

$$P_{total} = \frac{P_N}{\left(T_{total} - T_x\right)^{3/2}}$$

où $T_x$ (kbps) est la capacité de puissance de charge de débit maximum;
$P_N$ est la puissance du bruit blanc.

16. Procédé selon la revendication 15, dans lequel l'étape (d2) comprend en outre:

le calcul de la puissance de réception totale équivalente intervenue après l'accès à au moins un service, en fonction du débit en liaison montante estimé;

l'obtention de l'augmentation de puissance de réception Rx en liaison montante, en soustrayant la puissance totale de réception en liaison montante mesurée $P_{total}$ à partir de la puissance totale de réception calculée intervenue après l'accès à au moins un service.

17. Procédé selon la revendication 16, dans lequel l'étape (d3) comprend en outre:

l'obtention de la capacité de puissance en liaison montante restante, en soustrayant la puissance totale de réception en liaison montante mesurée, à partir de la puissance totale de réception en liaison montante maximum permise par la charge utile de la cellule.

18. Procédé selon la revendication 17, dans lequel la puissance totale de réception en liaison montante maximum permise par la charge utile de la cellule est déterminée selon la capacité réservée pour le softswitch.

**19.** Dispositif de contrôle d'admission (D) dans un système CDMA, permettant de contrôler une station mobile lors de l'accès à une cellule qui est desservie par la station de base, dans lequel le dispositif comprend:

un moyen de réception (650) permettant de recevoir, à partir de la station mobile, une demande d'appel pour avoir accès à la cellule afin d'initier au moins un service;

un moyen d'acquisition de paramètres (670), permettant d'acquérir des paramètres à partir de la demande d'appel, dans lequel les paramètres incluent un RSB rapport porteuse/densité de bruit, la vitesse de génération en liaison montante $R_{up}$ et/ou la vitesse de génération en liaison descendante $R_{down}$, l'ID de l'utilisateur et le type de service demandé par le au moins un service dans la demande d'appel;

un moyen de traitement de signal (680), permettant de déterminer l'affaiblissement de propagation en liaison descendante L du service; le calcul de la puissance d'augmentation en liaison descendante intervenue après l'accès à au moins un service, en fonction des paramètres acquis par le moyen d'acquisition; le calcul de la capacité de puissance en liaison descendante restante; la décision d'admettre ou non le au moins un service en liaison descendante en fonction de la capacité de puissance en liaison descendante restante et de la puissance d'augmentation en liaison descendante, l'admission du au moins un service en liaison descendante lorsque la puissance d'augmentation en liaison descendante est inférieure à une capacité de puissance en liaison descendante restante, ou bien le refus d'admettre le au moins un service;

un moyen de contrôle et de traitement (710), permettant de calculer l'augmentation de puissance de réception en liaison montante intervenue après l'accès à au moins un service, en fonction des paramètres acquis par le moyen d'acquisition; le calcul de la capacité de puissance en liaison montante restante; et la décision d'admettre ou non le au moins un service en liaison montante en fonction de la capacité de puissance en liaison montante restante et l'augmentation de puissance de réception en liaison montante, l'admission du au moins un service en liaison montante lorsque l'augmentation de puissance en liaison montante est inférieure à une capacité de puissance restante, ou bien le refus d'admettre le au moins un service;

un moyen de connexion de liaison (690) permettant d'établir une liaison montante et/ou une liaison descendante, si le au moins un service est admis à la fois par le moyen de traitement du signal et le moyen de contrôle et de traitement, sinon le rejet de la demande d'appel,

dans lequel le type de service indique que le au moins un service est un service en temps non réel ou un service en temps réel, et lorsqu'il s'agit d'un service en temps non réel, le procédé comprend en outre:

un moyen de recherche d'un format de transport du au moins un service et la prise en considération de la vitesse la plus basse dans le format de transport comme étant la vitesse en liaison montante $R_{up}$ ou la vitesse en liaison descendante $R_{down}$.

**20.** Dispositif selon la revendication 19, dans lequel le moyen de traitement du signal comprend:

un moyen de détermination du niveau de transmission (682), permettant de calculer le gain de conditionnement et le niveau de transmission requis par le au moins un service en liaison descendante;

un moyen de recherche (686) permettant de chercher l'affaiblissement de propagation en liaison descendante mesuré signalé récemment grâce à l'ID de l'utilisateur;

un premier moyen d'estimation (688), permettant d'estimer si l'affaiblissement de propagation est disponible et valide: s'il est disponible et valide, la prise en considération de l'affaiblissement de propagation en liaison descendante mesurée comme étant l'affaiblissement de propagation en liaison descendante L du service; sinon, la prise en considération d'une première valeur prédéfinie comme étant l'affaiblissement de propagation en liaison descendante L,

un moyen de détermination de la puissance d'augmentation (684), permettant de déterminer la puissance d'augmentation en liaison descendante après l'accès à au moins un service, en fonction des paramètres acquis par le moyen d'acquisition.

**21.** Dispositif selon la revendication 20, dans lequel selon le RSB rapport porteuse/densité de bruit, la vitesse en liaison descendante $R_{down}$, l'ID de l'utilisateur et le type de service requis par le service, le moyen de détermination de la puissance d'augmentation estime la puissance d'augmentation en liaison descendante comme $\Delta P_{dBm}$ en dBm,

$$\Delta P_{dBm} = L - \left\{ 103dBm + \left[ P_G - \left( \frac{E_b}{N_0} \right)_{dB} \right] \right\},$$

dans laquelle $\left( \frac{E_b}{N_0} \right)_{dB}$ est le RSB rapport porteuse/densité de bruit en dB, c'est-à-dire que

$$\left( \frac{E_b}{N_0} \right)_{dB} = 10 \log_{10} \left( \frac{E_b}{N_0} \right)$$

$P_G$ est un gain de conditionnement et $P_G = 10 \times \log_{10}(\frac{3840kbps}{R})$ dB,

où $R$ est la vitesse en liaison descendante $R_{down}$ en kbps, et L est un affaiblissement de propagation en liaison descendante.

**22.** Dispositif selon la revendication 21, dans lequel, quand le au moins un service inclut un service de données (service non vocal) et/ou un service vocal, la puissance d'augmentation en liaison descendante est modifiée en $\Delta P$ en mW:

$$\Delta P = 10^{0.1 \Delta P_{dBm}} \times \upsilon \quad mW$$

dans lequel $\upsilon$ est un facteur d'activation par la voix, dont la valeur pour le service de données est différente de celle pour le service vocal.

**23.** Dispositif selon la revendication 22 dans lequel lorsqu'on considère le mode non orthogonal des canaux physiques de code en liaison descendante, la puissance d'augmentation en liaison descendante est modifiée en $\Delta P_{total}$:

$$\Delta P_{total} = \left( \frac{E_b}{N_0} \times \alpha^2 + 1 \right) \Delta P \quad mW$$

où $\alpha$ est un facteur non orthogonal en liaison descendante dans un environnement radio multivoie et dépendant d'un environnement radio spécifique

**24.** Dispositif selon la revendication 23, dans lequel, lorsqu'on considère que la puissance de transmission des autres canaux augmente du fait de l'accès à au moins un service, la puissance d'augmentation en liaison descendante est en outre modifiée en $\Delta P_0'$ en mW:

$$\Delta P_0' = \Delta P_0 + \Delta P_{total}$$

$$\Delta P_0 = P_0 \alpha^2 \, mW,$$

où

$P_0$ est une puissance totale de transmission en liaison descendante intervenue avant l'accès à au moins un service, $\alpha$ est un facteur non orthogonal en liaison descendante dans un environnement radio multivoie et dépendant d'un environnement radio spécifique.

**25.** Dispositif selon la revendication 24, dans lequel la première valeur prédéterminée est un affaiblissement de la propagation d'un rayon équivalent qui est égal à 70,7 % du rayon de couverture maximum de la cellule et est calculée en substituant le rayon équivalent dans un modèle de propagation.

**26.** Dispositif selon les revendications 19 à 25, dans lequel le moyen de contrôle et de traitement comprend:

un moyen de détermination de la puissance de réception (713), permettant de calculer un débit équivalent en fonction de la puissance totale de réception mesurée avant l'accès à au moins un service; l'obtention du débit total intervenu après l'accès au service en ajoutant la vitesse en liaison montante $R_{up}$ au débit équivalent; le calcul de la puissance totale de réception équivalente intervenue après l'accès à au moins un service en se fondant sur le débit total intervenu après l'accès à au moins un service;

un second moyen d'estimation (716), permettant d'obtenir l'augmentation de la puissance de réception en liaison montante en soustrayant la puissance totale de réception mesurée avant l'accès au service à partir de la puissance de réception totale équivalente, l'obtention de la capacité de puissance en liaison montante restante en soustrayant la puissance de réception totale mesurée avant l'accès au service à partir de la puissance de réception totale autorisée par la charge utile de la cellule; le fait de déterminer si la capacité de puissance de réception en liaison montante restante est supérieure à la valeur d'augmentation de la puissance en liaison montante; si elle est supérieure, l'admission du service, sinon le refus d'admettre celui-ci.

**27.** Dispositif selon la revendication 26, dans lequel le deuxième moyen d'estimation (716) détermine la capacité de puissance en liaison montante restante en fonction de la capacité de puissance réservée pour un soft handover.

**28.** Procédé de contrôle d'admission effectué par une station de base dans un système DCMA, permettant de contrôler l'accès d'une station mobile à une cellule desservie par la station de base, dans lequel le procédé comprend les étapes consistant à:

la réception, à partir de la station mobile, d'une demande d'appel afin d'avoir accès à la cellule pour initier au moins un service;

l'acquisition de paramètres à partir de la demande d'appel, dans lequel les paramètres incluent RSB rapport porteuse/densité de bruit, la vitesse de génération en liaison descendante $R_{down}$, l'ID de l'utilisateur et le type de service demandé par le au moins un service;

le fait de déterminer l'admission du au moins un service en liaison descendante en se fondant sur la puissance d'augmentation en liaison descendante estimée;

l'estimation permettant de savoir si le au moins service peut être admis dans la liaison descendante en fonction de la capacité en liaison descendante restante disponible calculée de la cellule; l'admission du au moins un service en liaison descendante, si la puissance d'augmentation en liaison descendante est inférieure à la capacité de puissance en liaison descendante restante, sinon le rejet du au moins un service;

dans lequel le type de service indique si le service est un service en temps non réel ou un service en temps réel, et s'il s'agit d'un service en temps non réel, le procédé comprend en outre:

la recherche d'un format de transport du au moins un service et la prise en considération de la vitesse la plus basse dans le format de transport comme étant la vitesse en liaison descendante $R_{down}$.

**29.** Procédé de contrôle d'admission effectué par une station de base dans un système DCMA, permettant de contrôler l'accès d'une station mobile à une cellule desservie par la station de base, dans lequel le procédé comprend les étapes consistant à:

la réception, à partir de la station mobile, d'une demande d'appel afin d'avoir accès à la cellule pour initier au moins un service;

l'acquisition de paramètres à partir de la demande d'appel, dans lequel les paramètres incluent RSB rapport porteuse/densité de bruit, la vitesse de génération en liaison montante $R_{up}$, l'ID de l'utilisateur et le type de service demandé par le au moins un service;

décider de l'admission du au moins un service en liaison montante en se fondant sur l'augmentation de la puissance de réception en liaison montante, de la puissance d'augmentation en liaison montante, dans lequel l'admission du au moins un service en liaison montante, lorsque l'augmentation de puissance en liaison montante est inférieure à une capacité de puissance en liaison montante restante, sinon le refus d'admettre le au moins service;

dans lequel le type de service indique si le au moins un service est un service en temps non réel ou un service en temps réel, et s'il s'agit d'un service en temps non réel, le procédé comprend en outre:

la recherche d'un format de transport du au moins un service, et la prise en considération de la vitesse la plus basse dans le format de transport comme étant la vitesse en liaison montante $R_{up}$.

Fig. 1

201

202

203

UE 's downlink loss measurement functional module

RRC signaling logic channel

204

Node B common measurement

Iub interface NBAP signaling logic channel

RRM module in RRC implements CAC function

CN RAB request

Iu interface RANAP signaling logic channel

205

206

207

Fig. 2

Start of call processing

Acquire the required SNR Eb/No, uplink and downlink signal source rate R, user ID and traffic type from QoS parameter mapping table of the call traffic

Downlink rate is zero? — Y

N

Real-time traffic? — Y

N

Search the transfer format set corresponding to non real-time traffic

take the minimum rate for the transfer format of non real-time traffic as admission rate $R_{down}$

Call and use downlink call admission processing procedure

Real-time traffic? — Y

N

Search the transfer format set corresponding to non real-time traffic

take the minimum rate for the transfer format of non real-time traffic as admission rate $R_{up}$

Turn to uplink call admission processing procedure

Fig. 3(1)

Fig. 3(2)

```
┌─────────────────────────────────────────────┐
│   Start of downlink admission processing procedure   │
└─────────────────────────────────────────────┘
                      │
                      ▼
┌─────────────────────────────────────────────┐
│   Acquire downlink Eb/No, R, traffic priority  │
│            and calling user ID                │
└─────────────────────────────────────────────┘
                      │
                      ▼
┌─────────────────────────────────────────────┐
│  Search downlink path loss (dB) reported latest by the user │
│                      ID                       │
└─────────────────────────────────────────────┘
                      │
                      ▼
Y          ◇─────────────────────────────◇
  ┌────────     Measured path loss is valid?
  │          ◇─────────────────────────────◇
  │                   │ N
  │                   ▼
  │    ┌─────────────────────────────────────────────┐
  │    │  Search downlink path loss (dB) reported latest by the user │
  │    │                      ID                       │
  │    └─────────────────────────────────────────────┘
  │                   │
  └───────────────────┤
                      ▼
┌─────────────────────────────────────────────┐
│ Multiply maximum coverage radius of the cell with 0.707 │
│ and then substitute it into propagation model to compute the │
│   mean path loss L (dB) of the equivalent radius   │
└─────────────────────────────────────────────┘
                      │
                      ▼
┌─────────────────────────────────────────────┐
│ Calculate the processing gain and transmission level for │
│ traffic downlink according to the mean path loss L, traffic │
│        rate R_down and the required SNR        │
└─────────────────────────────────────────────┘
                      │
                      ▼
┌─────────────────────────────────────────────┐
│   Calculate downlink climb power of the call traffic   │
└─────────────────────────────────────────────┘
                      │
                      ▼
┌─────────────────────────────────────────────┐
│   Calculate downlink climb power of the system cell   │
└─────────────────────────────────────────────┘
                      │
                      ▼
┌─────────────────────────────────────────────┐
│   Calculate downlink payload increment of the traffic   │
└─────────────────────────────────────────────┘
                      │
                      ▼
┌─────────────────────────────────────────────┐
│ Subtract the measured payload of the cell from the rating │
│ payload of the cell of different traffics, to get the available │
│      remaining capacity of the system cell      │
└─────────────────────────────────────────────┘
                      │
                      ▼
        ◇─────────────────────────────◇                N
   the available remaining capacity higher than ──────────┐
        the traffic payload increment?                    │
        ◇─────────────────────────────◇                    ▼
                   │ Y              ┌─────────────────────────────────────────┐
                   ▼                │ Set downlink admission permission as 'false' │
┌──────────────────────────────────┐ └─────────────────────────────────────────┘
│ Set downlink admission permission as 'true' │              │
└──────────────────────────────────┘              │
                   │◄─────────────────────────────┘
                   ▼
┌─────────────────────────────────────────────┐
│   End of the call, and return to the call entry   │
└─────────────────────────────────────────────┘
                   │
                   ▼
```

Fig. 4

Start of uplink admission processing procedure

Extract uplink signal source rate $R_{up}$, the required SNR Eb/No, priority level and user ID from the QoS parameters of the call traffic

Obtain uplink total Rx (interference) power (dB) of the cell from the measured data groups reported by the base station

Calculate the equivalent throughput corresponding to the call traffic according to the Rx total power

Add the equivalent throughput and the uplink rate $R_{up}$ of the traffic, to get the total throughput

Obtain a total power (dB) corresponding to the total throughput

Subtract the absolute value (measured value) of the cell's total Rx power from the absolute value of the total power, to get the uplink Rx power increment for the call traffic

Subtract absolute measured value of total Rx power from the absolute value of the total Rx power allowed by the cell payload, to get the remaining uplink capacity of the cell

Convert the remaining uplink capacity of the cell into available remaining capacity of the cell according to the handover reservation capacity requirement

Available remaining uplink capacity above traffic payload increment?

N

Set uplink admission permission as 'false'

Y

Set uplink admission permission as 'true'

Go to call processing joint entry

Fig. 5

EP 1 463 356 B1

600

620

610

Mobile station

Mobile station transceiver

Base station

Base station transceiver

630

Control means

650

670

680

690

Rx means

Parameters acquiring means

connection judging means

Signal processing means

Tx level calculating means

Power climb calculating means

Path loss history searching means

Path loss validity judging means

682

684

686

686

Fig. 6

40

620

610

Mobile station

Mobile station
transceiver

Base station

Base station
transceiver

700

690

Uplink Admission
Control Device

Connection
judging means

650

670

Rx Means

Parameters
acquiring means

710

Control & processing means

Rx power
determining
means

Judging
means

713

716

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5687171 A

- WO 0135692 A1